# EUROPEAN PATENT SPECIFICATION

(11) **EP 2 418 493 B1**
(45) Date of publication and mention of the grant of the patent: **27.11.2019**
(21) Application number: 10761743.3
(22) Date of filing: 08.04.2010
(51) Int. Cl.: G01N 35/04, G01N 35/02

(54) **AUTOANALYZER AND DISPENSING APPARATUS**
AUTOANALYSEGERÄT UND AUSGABEVORRICHTUNG
AUTO-ANALYSEUR ET APPAREIL DISTRIBUTEUR

(30) Priority: 09.04.2009 JP 2009094785; 20.04.2009 JP 2009101786; 25.06.2009 JP 2009151210
(43) Date of publication of application: 15.02.2012
(73) Proprietor: Hitachi High-Technologies Corporation, Tokyo 105-8717 (JP)
(72) Inventor: MIMURA, Tomonori, Hitachinaka-shi Ibaraki 312-8504 (JP); MAKINO, Akihisa, Hitachinaka-shi Ibaraki 312-8504 (JP); ADACHI, Sakuichiro, Kokubunji-shi Tokyo 185-8601 (JP)
(74) Representative: Strehl Schübel-Hopf & Partner
(86) International application number: PCT/JP2010/056395
(87) International publication number: WO 2010/117044

(56) References cited:
- EP-A2- 1 477 816
- WO-A1-2006/107016
- JP-A- 4 315 055
- JP-A- 5 080 059
- JP-A- 5 080 059
- JP-A- 6 088 828
- JP-A- 6 317 598
- JP-A- 8 313 537
- JP-A- 9 049 847
- JP-A- 62 049 259
- JP-A- 63 289 455
- JP-A- 2000 009 741
- JP-A- 2001 033 462

## Description

### TECHNICAL FIELD

The present invention relates to an automatic analysis device which automatically analyzes a component of blood or others, and more particularly, the present invention relates to a technique effectively applied to a device which carries out a test for a plurality of items such as a biochemical test, an immunoserological test, and a blood coagulation test.

### BACKGROUND ART

In a clinical laboratory test, various pretreatments such as centrifugal separation, hemolysis, and B/F separation of an antigen-antibody reaction in an immunoserological test are required. These pretreatments are not carried out in an automatic analysis device which actually carries out the tests, but are previously carried out in a dedicated device in many cases.

As the device which previously carries out the pretreatments, a specimen conveying system is well known. In the specimen conveying system, a pretreatment unit and a plurality of analysis devices are connected by a belt conveyor, and a specimen (sample) set in a rack is conveyed on the belt conveyor to a target pretreatment unit or analysis device. However, if a system which automatically processes all of such tests carried out in a clinical laboratory is introduced, huge cost is required, and the introduction cannot be carried out in a general hospital or others.

In a dedicated device for the immunoserological test, the treatment of the B/F separation, the hemolysis, or others is achieved by a pretreatment mechanism unit in the device. However, the device to which a B/F separating function is added generally has a complicated mechanism, and problems such as a large device size and low processing ability have been pointed out. Meanwhile, if devices are not mutually connected in the system, each test is individually carried out, and a plurality of tasks such as movement of the specimen among the devices, setting of the specimen to the device, an analysis test-requesting operation, and summarizing of output results are mixed with each other, and their efficiency is also bad.

In order to improve these problems, a technique by which a series of tests such as the biochemical test, the immunoserological test, and the blood coagulation test can be carried out in the same device is known. For example, Patent Document 1 has proposed a device configured with a first test mechanism which carries out the biochemical and immunoserological tests and a second test mechanism which carries out the blood coagulation test. Also, Patent Document 2 has proposed a test method of sequentially moving many reaction vessels by a vessel-by-vessel advancing operation and calculating light intensity at a light-measuring interval in accordance with each sample in a reciprocating operation. Further, in recent years, a device including the plurality of test mechanisms and also including the pretreatment function or others has been commercialized.

### Prior Art Documents

### Patent Documents

Patent Document 1: Japanese Patent Application Laid-Open Publication No. 2001-13151
Patent Document 2: Japanese Patent Application Laid-Open Publication No. 2001-27639

JP 5 080059 A discloses an automatic analyzer with the features in the preamble of present claim 1. Another conventional analyzer is described in EP 1 477 816 A2.

### DISCLOSURE OF THE INVENTION

### PROBLEMS TO BE SOLVED BY THE INVENTION

However, when the analyses for the plurality of fields such as the biochemical test, the immunoserological test, and the blood coagulation test are simply combined in one device, relations between the analyses are complicated. Also, both of the proposals of Patent Documents 1 and 2 are to carry out the pretreatment or others in a different device, and the device configuration including the pretreatment cannot be simplified. Further, even in the above-described device also including the pretreatment function or others which has been commercialized in recent years, the number of device mechanisms is large since a reagent dispensing mechanism is provided for each of all the test items for immunity, biochemistry, and others, and therefore, the device has a complicated configuration.

Here, according to a study by the inventors, it has been found out that, when the number of test requests for each test item is counted, the biochemical test has a large number of test requests such that a ratio of the biochemical test to other tests is 5 to about 1, and the number of items in which the pretreatment is carried out is small in analysis steps of the biochemical test.

Therefore, in order to simplify the device configuration, it is desired, as ensuring a path for carrying out the biochemical test having the relatively large number of test requests, to provide a mechanism which can be commonly used between a test for an item such as the immunoserological test having the relatively small number of test requests and a test having a small number of test requests among the biochemical tests in which the pretreatment is carried out.

Also, when the device configuration is complicated, its operation is necessarily complicated. Therefore, in order to simplify the device, it is required to commonly use a part of the mechanism or operation. However, in the reagent dispensing mechanism, a timing of reagent dispensing in analysis units (test mechanisms) is different from each other. Therefore, unless a dedicated reagent dispensing mechanism is provided for each analysis unit, the analysis is difficult. That is, even if the reagent dispensing mechanism is simply commonly used, the timing of the reagent dispensing is overlapped among the plurality of items, and the processing ability is reduced.

Therefore, in order to prevent the reduction in the processing ability of the device, it is desired, as ensuring the prior use in the test for the item having the relatively large number of test requests, to commonly use the reagent dispensing mechanism in the test for the item having the relatively small number of test requests and the dispensing of the pretreatment liquid.

Also, the mechanism which is used only for the items other than the biochemical test or for the case that the pretreatment is carried out has a low usage frequency, and it is desired that a mechanism for only the biochemical test in which the pretreatment is not carried out is also used for the mechanism, or that a mechanism having a high usage frequency which is used for both of the biochemical test in which the pretreatment is not carried out and other items than the biochemical test is also used for the mechanism.

A preferred aim of the present invention is to provide an automatic analysis device capable of simplifying a device configuration by providing a mechanism which can be commonly used among tests for respective items as ensuring a path for carrying out a test for an item having a relatively large number of test requests.

Another preferred aim of the present invention is to provide an automatic analysis device capable of efficiently carrying out a test for a plurality of items as simplifying a device configuration by commonly using a reagent dispensing mechanism.

Still another preferred aim of the present invention is to provide an automatic analysis device capable of simplifying a device by omitting a mechanism having a low usage frequency and to provide a dispensing device used in the automatic analysis device.

The above and other preferred aims and novel characteristics of the present invention will be apparent from the description of the present specification and the accompanying drawings.

### MEANS FOR SOLVING THE PROBLEMS

The invention is defined in the appended claims. Examples useful to understand the invention and disclosed in the present application will be briefly described as follows.

An automatic analysis device according to a typical example includes: an intermediate unit on which an intermediate container for mixing a sample dispensed from a sample container with pretreatment liquid or a reagent is arranged; and a plurality of analysis units for carrying out a test for the sample dispensed from the intermediate container. The plurality of analysis units include: a main analysis unit for carrying out a test for an item having a relatively large number of test requests, on which a reaction vessel for carrying out a reaction of a reagent with the sample obtained after the pretreatment by the pretreatment liquid is arranged; and a plurality of sub analysis units for carrying out a test for an item having a relatively small number of test requests in a test for the sample obtained after the reaction with the reagent in the intermediate container.

Also, an automatic analysis device according to a typical example is an automatic analysis device including: an intermediate disk on which an intermediate container for carrying out a pretreatment by pretreatment liquid for a sample dispensed from a sample container or a reaction of a reagent with the sample is arranged; test mechanisms for a plurality of items for the sample dispensed from the sample container or the intermediate container; a reaction disk which is provided to any of the test mechanisms and on which a reaction vessel for carrying out a reaction of the reagent with the sample is arranged; and a reagent dispensing mechanism which dispenses the reagent into the intermediate container and/or the reaction vessel. The reagent dispensing mechanism is commonly used as a pretreatment-liquid dispensing mechanism which dispenses the pretreatment liquid into the intermediate container.

Further, an automatic analysis device according to a typical example is an automatic analysis device including: a detachable container for carrying out a reaction of a reagent with a sample and/or a pretreatment of the sample by pretreatment liquid; and dispensing mechanisms each including a dispensing nozzle for dispensing at least any of the sample, the reagent, and the pretreatment liquid into the container. At least one of the dispensing mechanisms is functioned also as a container conveying mechanism for conveying the container.

Still further, a dispensing device according to a typical example is a dispensing device including a dispensing nozzle for dispensing at least any of a sample, a reagent, and pretreatment liquid into a container used in an automatic analysis device, and is also functioned as a container conveying mechanism for conveying the container.

### EFFECTS OF THE INVENTION

The effects obtained by the above examples useful to understand the present invention disclosed in the present application will be briefly described below.

That is, an automatic analysis device includes: an intermediate unit on which an intermediate container for mixing a sample with pretreatment liquid or a reagent is arranged; and a plurality of analysis units for carrying out a test for the sample dispensed from the intermediate container, and therefore, the intermediate unit can be commonly used among a plurality of test items.

Also, the plurality of analysis units are separated into: a main analysis unit for carrying out a test for an item having a relatively large number of test requests, on which a reaction vessel for carrying out a reaction after the treatment is arranged; and a plurality of sub analysis units for carrying out a test for an item having a relatively small number of test requests obtained after a reaction in the intermediate container, and therefore, the test for the item having the relatively large number of test requests can be carried out without being prevented by a test for other items.

As described above, by providing the mechanism which can be commonly used among tests for respective items as ensuring the path for carrying out the test for the item having the relatively large number of test requests, the device configuration can be simplified.

Also, in the automatic analysis device, the reagent dispensing mechanism is commonly used as a pretreatment-liquid dispensing mechanism which dispenses the pretreatment liquid into the intermediate container. Therefore, by commonly using the reagent dispensing mechanism in the test for the item having the small number of test requests as the pretreatment-liquid dispensing mechanism, the reagent dispensing mechanism can be commonly used as ensuring the prior use in the test for the item having the large number of test requests, so that the device can have a simple configuration without reducing the processing ability. In this manner, by commonly using the reagent dispensing mechanism, the test for the plurality of items can be efficiently carried out as simplifying the device configuration.

Further, in the above example, the dispensing mechanism including the dispensing nozzle which dispenses at least any of the sample, the reagent, and the pretreatment liquid is functioned also as the container conveying mechanism which conveys the container for carrying out the reaction of the reagent with the sample and/or the pretreatment by the pretreatment liquid for the sample, and therefore, the dispensing mechanism having the high usage frequency is also used as the container conveying mechanism having the low usage frequency to omit the container conveying mechanism. In this manner, the device can be simplified by omitting the mechanism having the low usage frequency.

### BRIEF DESCRIPTIONS OF THE DIAGRAMS

FIG. 1 is a schematic plan view showing an outline of an embodiment of an automatic analysis device of the present invention;
FIG. 2 is a view showing flows of a sample, pretreatment liquid, a reagent, and others in the automatic analysis device of FIG. 1;
FIGs. 3A to 3C are explanatory views each explaining an example of an operation flow in the automatic analysis device of FIG. 1;
FIGs. 4A to 4C are another explanatory views each explaining an example of an operation flow in the automatic analysis device of FIG. 1;
FIGs. 5A to 5C are still another explanatory views each explaining an example of an operation flow in the automatic analysis device of FIG. 1;
FIG. 6 is an explanatory view explaining another example of the operation flow in the automatic analysis device of FIG. 1;
FIGs. 7A and 7B are schematic plan views each showing an outline of an embodiment of an automatic analysis device of the present invention, in which the number of reagent dispensing mechanisms is changed;
FIGs. 8A and 8B are schematic plan views each showing an outline of another embodiment of the automatic analysis device of the present invention, in which the number of reagent dispensing mechanisms is changed;
FIG. 9 is a schematic plan view showing an outline of still another embodiment of the automatic analysis device of the present invention, in which the number of reagent dispensing mechanisms is changed;
FIG. 10 is a schematic plan view showing an outline of an embodiment of an automatic analysis device of the present invention, in which a sample rack is provided;
FIG. 11 is a principal-part schematic perspective view showing a modification example of a dispensing mechanism;
FIG. 12 is a schematic plan view showing an outline of an embodiment of an automatic analysis device of the present invention, in which an intermediate disk and a reaction disk are combined with each other;
FIGs. 13A and 13B are a schematic plan view showing an outline of an embodiment of an automatic analysis device of the present invention, in which a stand-by disk is provided, and a view showing its flow, respectively;
FIG. 14 is an explanatory diagram explaining a basic cycle;
FIG. 15 is an explanatory diagram explaining a rotating operation of an intermediate disk in an A cycle;
FIGs. 16A and 16B are explanatory diagrams explaining a rotating operation of an intermediate disk in a B cycle;
FIGs. 17A to 17D are explanatory diagrams explaining an operation in a case of taking the shortest cycle as the basic cycle of FIG. 14;
FIG. 18 is a diagram showing an example of a rotating operation of an intermediate disk in a case that 20 containers are arranged;
FIG. 19 is a diagram showing an example of a rotating operation of an intermediate disk in another case that 20 containers are arranged;
FIG. 20 is a diagram showing an example of a rotating operation of an intermediate disk in still another case that 20 containers are arranged;
FIG. 21 is a diagram showing an example of a rotating operation of an intermediate disk in still another case that 20 containers are arranged;
FIG. 22 is a diagram showing an example of a rotating operation of an intermediate disk in still another case that 20 containers are arranged;
FIG. 23 is a diagram showing an example of a rotating operation of an intermediate disk in still another case that 20 containers are arranged;
FIG. 24 is a diagram showing an example of a rotating operation of an intermediate disk in still another case that 20 containers are arranged;
FIGs. 25A and 25B are explanatory diagrams each explaining an example of an operation in a case that operation cycles of "n = 2" and "n = 3" are combined;
FIG. 26 is an explanatory diagram explaining an operation in a case of requiring sample leaving or sample heating at a certain temperature in a pretreatment;
FIGs. 27A and 27B are explanatory diagrams each explaining an operation example in a biochemical test;
FIGs. 28A to 28D are explanatory diagrams each explaining an operation example in an immunoserological test;
FIGs. 29A to 29C are explanatory diagrams each explaining an operation example in a case that the biochemical test and the immunoserological test are combined;
FIG. 30A to FIG. 30C are flowcharts each showing a flow of priority judgment;
FIGs. 31A to 31C are explanatory diagrams each explaining an operation example in accordance with the priority judgment;
FIG. 32 is an explanatory diagram explaining overlap of a reagent dispensing mechanism;
FIG. 33 is a schematic plan view showing an outline of an embodiment of an automatic analysis device of the present invention, in which a multiple-use mechanism is provided;
FIG. 34 is a view showing flows of the sample, the pretreatment liquid, the reagent, and a disposable container in the automatic analysis device of FIG. 33;
FIG. 35 is a principal-part perspective view showing the multiple-use mechanism;
FIGs. 36A to 36C are explanatory views each explaining a flow of an operation of the multiple-use mechanism used as a pretreatment-liquid/reagent dispensing mechanism;
FIGs. 37A to 37C are explanatory views each explaining another flow of an operation of the multiple-use mechanism used as the pretreatment-liquid/reagent dispensing mechanism;
FIGs. 38A to 38C are explanatory views each explaining a flow of an operation of the multiple-use mechanism used as a disposable-container conveying mechanism;
FIGs. 39A to 39C are explanatory views each explaining another flow of an operation of the multiple-use mechanism used as the disposable-container conveying mechanism;
FIGs. 40A to 40D are explanatory views each explaining a flow of an operation in the automatic analysis device of FIG. 33;
FIG. 41 is an explanatory diagram explaining a basic cycle of a common disk;
FIG. 42 is an explanatory diagram explaining a rotating operation of the common disk in an α cycle;
FIGs. 43A and 43B are explanatory diagrams each explaining a rotating operation of the common disk in a β cycle;
FIGs. 44A to 44D are explanatory diagrams each explaining an example of an operation in a case of the shortest cycle of the basic cycle of FIG. 41;
FIG. 45 is a diagram showing an example of a rotating operation of a common disk in a case that 20 containers are arranged;
FIG. 46 is a diagram showing an example of a rotating operation of a common disk in another case that 20 containers are arranged; and
FIG. 47 is a diagram showing still an example of a rotating operation of a common disk in still another case that 20 containers are arranged.

### BEST MODE FOR CARRYING OUT THE INVENTION

Hereinafter, embodiments of the present invention will be explained in detail with reference to the accompanying drawings. Note that components having the same function are denoted by the same reference symbols in principle throughout the drawings for explaining the embodiments, and the repetitive description thereof will be omitted as much as possible.

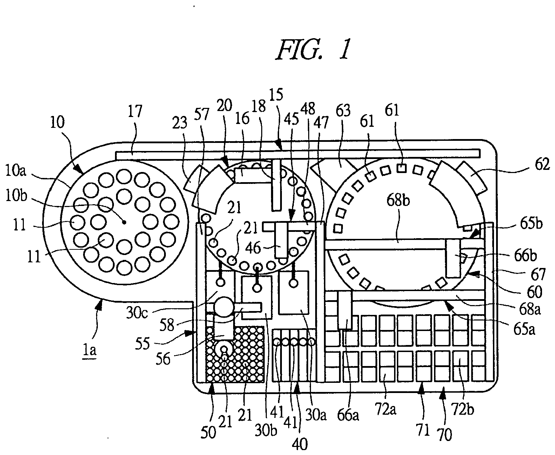

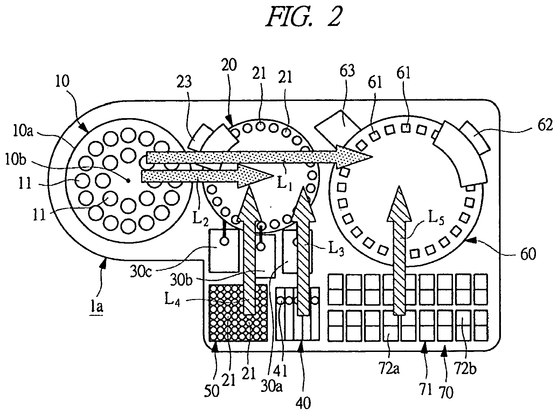

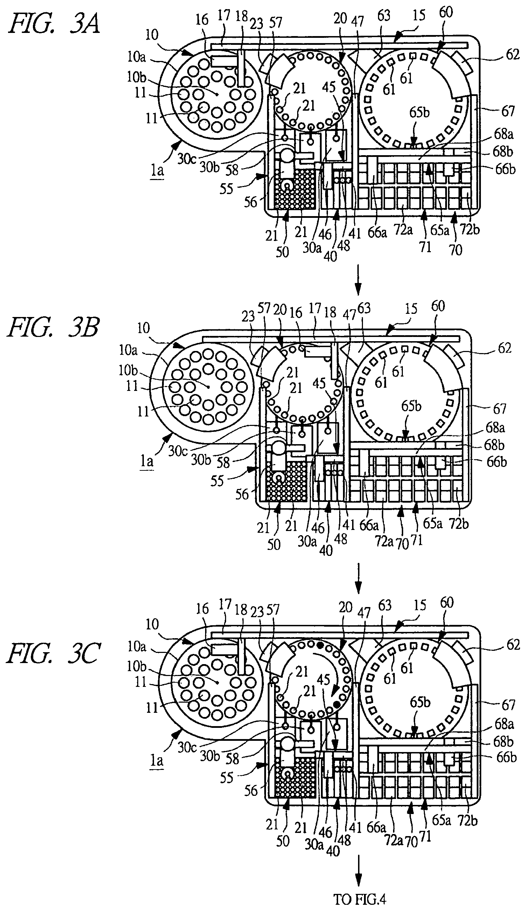

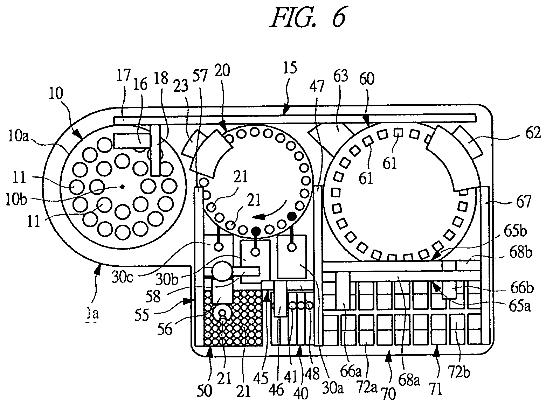

FIG. 1 is a schematic plan view showing an outline of an embodiment of an automatic analysis device of the present invention, and FIG. 2 is a view showing flows of a sample, pretreatment liquid, a reagent, and others in the automatic analysis device of FIG. 1. FIGs. 3A to 3C, FIGs. 4A to 4C, and FIGs. 5A to 5C are explanatory views each explaining an example of an operation flow in the automatic analysis device of FIG. 1 in this order. FIG. 6 is an explanatory view explaining another example of the operation flow in the automatic analysis device of FIG. 1. Note that, in FIG. 2, the showing of the sample dispensing mechanism is intentionally omitted for convenience of understanding. Also, the showing of a controlling unit for controlling the entire automatic analysis device, a displaying unit of an analysis data, an inputting unit thereof, and a memory unit thereof is intentionally omitted in any drawing.

As shown in FIG. 1, along a longitudinal direction of the device, an automatic analysis device 1a includes: a sample disk 10; an intermediate disk (intermediate unit) 20; and a reaction disk (main analysis unit) 60, in this order.

In a device front side of the intermediate disk 20, flow-based analysis mechanisms (sub analysis unit, test mechanism) 30a to 30c are provided. In a further device front side of this flow-based analysis mechanisms 30a to 30c, a pretreatment liquid/flow-based analysis reagent container storage unit (hereinafter, referred to as "pretreatment-liquid-container/others storage unit") 40 and a disposable-container storage unit 50 are provided. In a device front side of the reaction disk 60, a biochemical-test reagent retaining area (reagent retaining area) 70 is provided.

And, between the components, each dispensing mechanism or conveying mechanism as described below is provided. That is, between the sample disk 10 and the reaction disk 60, a sample dispensing mechanism 15 is provided. Between the intermediate disk 20 and the pretreatment-liquid-container/others storage unit 40, a pretreatment liquid/flow-based analysis reagent dispensing mechanism (reagent dispensing mechanism, hereinafter, referred to as "pretreatment-liquid/others dispensing mechanism") 45 is provided. Similarly, between the intermediate disk 20 and the disposable-container storage unit 50, a disposable-container conveying mechanism 55 is provided. Also, between the reaction disk 60 and the biochemical-test reagent retaining area 70, first and second reagent dispensing mechanisms 65a and 65b are provided.

In the sample disk 10, sample containers 11 for retaining samples are arranged on each of an outer circumference 10a side and a center 10b side at a predetermined interval.

The intermediate disk 20 is provided on a lateral side of the sample disk 10, and carries out not only the pretreatment for the sample by the pretreatment liquid but also a reaction of the flow-based analysis reagent with the sample. Note that, when the "pretreatment" is mentioned in the present invention, dilution of the sample is included therein. Also, the "pretreatment" may be mentioned in some cases as including a treatment of dispensing of the flow-based analysis reagent, and then, leaving the sample during a predetermined time period or heating the sample at a certain temperature.

In the intermediate disk 20, disposable containers (intermediate containers) 21 are detachably arranged along a circumferential direction at a predetermined interval, and besides, a rinsing mechanism 23 for rinsing the disposable containers 21 is provided in the drawing example. Note that, when all of the disposable containers 21 are used to be disposable, the rinsing mechanism 23 may be not provided. Also, although the showing is omitted, an agitating mechanism for agitating the sample with the pretreatment liquid or the flow-based reagent is also provided.

The flow-based analysis mechanisms 30a to 30c can arbitrarily select and carry out a test for a publicly-known item in which the flow-based analysis (the test for the item having the relatively small number of test requests) can be carried out such as the immunoserological test, the blood coagulation test, and the electrolyte test, in accordance with a content of the test request. The number of the flow-based analysis mechanisms may be arbitrarily increased, decreased, or eliminated in accordance with the content of the test request. In this manner, the device can be further simplified. Also, since the number of patterns of the sample-conveying path is decreased, the control becomes easy, and a test efficiency can be improved.

It is needless to say that, in containers 41 stored in the pretreatment-liquid-container/others storage unit 40, each of the pretreatment liquid in carrying out the pretreatment and a test reagent for the corresponding flow-based analysis in carrying out the flow-based analysis is retained.

The disposable containers 21 stored in the disposable-container storage unit 50 can be arbitrarily exchanged with the disposable containers 21 in the intermediate disk 20 by the disposable-container conveying mechanism 55.

In the reaction disk 60, reaction vessels 61 fixed along a circumferential direction are arranged at a predetermined interval, and besides, a light-measuring mechanism 62 for the biochemical test (test having the relatively large number of test requests) and a rinsing mechanism 63 for rinsing the reaction vessels 61 are provided, and the reaction disk 60 constitutes a test mechanism together with these mechanisms.

The reaction disk 60 is a unit in which the biochemical test having the relatively large number of test requests is carried out. Therefore, its diameter is formed larger than that of the intermediate disk 20 so that many reaction vessels 61 can be arranged. The light-measuring mechanism 62 includes a light source for radiating analysis light for analyzing reaction liquid in the reaction vessels 61, a detector for dispersing and detecting the analysis light which has transmitted through the reaction liquid, and others, although they are not shown. Also, in the reaction disk 60, an agitating mechanism for agitating the sample with the reagent is also provided, although the showing is similarly omitted. Note that, in the present application, the "biochemical test" is a general test except for an urgent test item, and means a test having the name conventionally used by those skilled in the art.

In the biochemical-test reagent retaining area 70, reagent cassettes (reagent containers) 71 are arranged. In each of the reagent cassettes 71, first and second reagent retaining units 72a and 72b for the biochemical test are formed. In this manner, a first reagent and a second reagent for the biochemical test can be retained in one container, and it is not required to separately manage them. However, the first reagent and the second reagent may be separately retained in containers such as test tubes. Alternatively, by providing a reagent disk, they may be retained in a container arranged on the disk.

The sample dispensing mechanism 15 is a so-called XYZ-rail type dispensing mechanism including: a sample dispensing arm 16; a width-direction rail 17 provided along a width direction of the device; a depth-direction rail 18 provided along a depth direction thereof; and a height-direction rail provided along a height direction thereof although it is not shown. In this manner, the sample dispensing mechanism 15 can arbitrarily approach a container at any position on the intermediate disk 20 or the reaction disk 60 to dispense the sample.

The width-direction rail 17 is provided from the sample disk 10 to the reaction disk 60 in a rear end of the device. The depth-direction rail 18 is attached so as to be extended from the width-direction rail 17 toward an inner side of the device to be slid on the width-direction rail 17. The sample dispensing arm 16 is attached to the depth-direction rail 18 via the height-direction rail to be slid on the depth-direction rail 18.

All of the pretreatment-liquid/others dispensing mechanism 45, the disposable-container conveying mechanism 55, and the first and second reagent dispensing mechanisms 65a and 65b are the XYZ-rail type dispensing mechanisms similarly to the sample dispensing mechanism 15.

The pretreatment-liquid/others dispensing mechanism 45 arbitrarily selects and dispenses the pretreatment liquid or the flow-based analysis reagent retained in the container 41 of the pretreatment-liquid-container/others storage unit 40 in accordance with the content of the test request. That is, in the test item of the flow-based analysis or the biochemical test item which requires the pretreatment, the number of test requests is relatively small, and therefore, the pretreatment-liquid/others dispensing mechanism 45 collectively carries out their dispensing.

The pretreatment-liquid/others dispensing mechanism 45 includes: a pretreatment-liquid/others dispensing arm 46; a depth-direction rail 47 extending from a space between the intermediate disk 20 and the reaction disk 60 toward a front side of the device; a width-direction rail 48 attached so as to be extended from the depth-direction rail 47 toward the intermediate disk 20 side; and a height-direction rail which is not shown. And, the width-direction rail 48 slides on the depth-direction rail 47, and the pretreatment-liquid/others dispensing arm 46 slides on the width-direction rail 48 via the height-direction rail. Note that the depth-direction rail 47 is shared by the first and second reagent dispensing mechanisms 65a and 65b.

The disposable-container conveying mechanism 55 includes a container gripping arm 56 for gripping the disposable container 21 at a tip thereof. Also, the disposable-container conveying mechanism 55 includes: a depth-direction rail 57 which is opposed to the depth-direction rail 47 of the pretreatment-liquid/others dispensing mechanism 45 so as to interpose the intermediate disk 20 therebetween; a width-direction rail 58 attached so as to be extended from the depth-direction rail 57; and a height-direction rail provided along the height direction although not shown. And, the width-direction rail 58 slides on the depth-direction rail 57, and the container gripping arm 56 slides on the width-direction rail 58 via the height-direction rail.

The first reagent dispensing mechanism 65a is a mechanism for dispensing the first reagent for the biochemical test, and shares the depth-direction rail 47 with the pretreatment-liquid/others dispensing mechanism 45. This first reagent dispensing mechanism 65a includes: a first reagent dispensing arm 66a; a depth-direction rail 67 opposed to the depth-direction rail 47 so as to interpose the reaction disk 60 therebetween; a width-direction rail 68a installed between the depth-direction rails 47 and 67; and a height-direction rail which is not shown. And, the width-direction rail 68a slides on the depth-direction rails 47 and 67, and the first reagent dispensing arm 66a slides on the width-direction rail 68a via the height-direction rail.

The second reagent dispensing mechanism 65b is a mechanism for dispensing the second reagent for the biochemical test, shares the depth-direction rail 47 with the pretreatment-liquid/others dispensing mechanism 45 and the first reagent dispensing mechanism 65a, and includes: a second reagent dispensing arm 66b; a width-direction rail 68b installed between the depth-direction rails 47 and 67; and a height-direction rail which is not shown. And, similarly to the first reagent dispensing mechanism 65a, the width-direction rail 68b slides on the depth-direction rails 47 and 67, and the second reagent dispensing arm 66b slides on the width-direction rail 68b via the height-direction rail.

As described above, in the automatic analysis device 1a, as shown in FIG. 2, a flow L₁ of the sample from the sample disk 10 to the reaction disk 60 in the case of the biochemical test in which the pretreatment is not carried out, and a similar flow L₂ of the sample to the intermediate disk 20 in the case of the biochemical test in which the pretreatment is carried out or the flow-based analysis are formed. Also, a flow L₃ of the pretreatment liquid or others from the pretreatment-liquid-container/others storage unit 40 to the intermediate disk 20, a similar flow L₄ of the disposable container 21 from the disposable-container storage unit 50, and a flow L₅ of the reagent from the biochemical-test reagent retaining area 70 to the reaction disk 60 are formed.

The operation flows of the automatic analysis device 1a based on the above-described formation are explained by taking the case that the pretreatment is required in the biochemical test as an example.

As shown in FIG. 3A, in the automatic analysis device 1a, when the biochemical test requiring the pretreatment is started, the sample dispensing arm 16 of the sample dispensing mechanism 15 is moved onto the sample container 11 of the sample disk 10 by the width-direction rail 17, the depth-direction rail 18, and others, and suctions the sample in the sample container 11.

After the sample suction, as shown in FIG. 3b, the sample dispensing arm 16 is moved onto the disposable container 21 of the intermediate disk 20 to discharge the sample into this disposable container 21.

After the sample discharge, as shown in FIG. 3C, the intermediate disk 20 rotates clockwise (see an arrow in the drawing) to move the sample (at blackly-filled positions in the drawing in which both of the positions before and after the movement are filled with a black color for convenience of understanding). Also, the pretreatment-liquid/others dispensing arm 46 of the pretreatment-liquid/others dispensing mechanism 45 is moved onto the container 41 of the pretreatment-liquid-container/others storage unit 40 by the depth-direction rail 47, the width-direction rail 48, and others, to suck the pretreatment liquid in the container 41. Note that, in the drawing example, the sample dispensing arm 16 returns to an initial position on the sample disk 10.

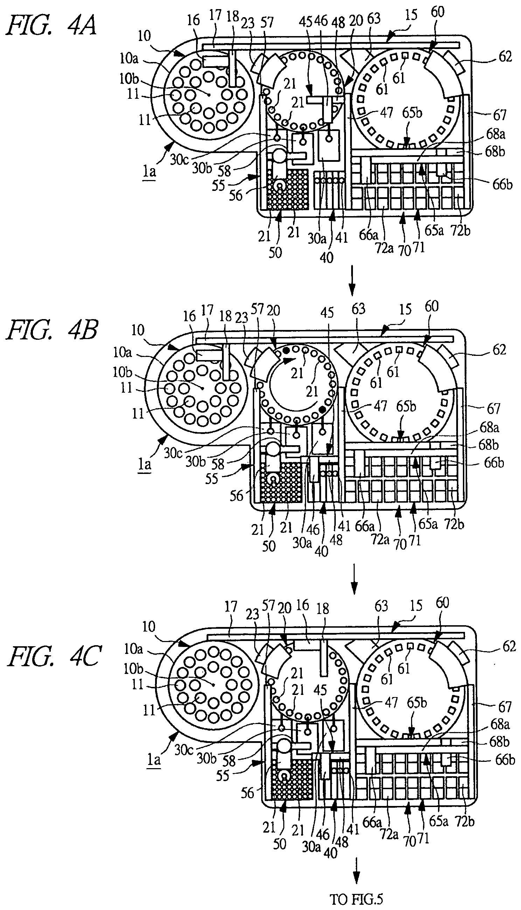

After the sample movement and the pretreatment-liquid suction, as shown in FIG. 4A, the pretreatment-liquid/others dispensing arm 46 is moved onto the disposable container 21 of the intermediate disk 20, in which the sample exists, to discharge the pretreatment liquid into this disposable container 21. That is, the sample and the pretreatment liquid are mixed with each other.

After the pretreatment-liquid discharge followed by the pretreatment, as shown in FIG. 4B, the intermediate disk 20 rotates clockwise (see an arrow in the drawing) to move the pretreated sample. Note that, in the drawing example, the pretreatment-liquid/others dispensing arm 46 returns to an initial position on the pretreatment-liquid-container/others storage unit 40.

After the pretreated-sample movement, as shown in FIG. 4C, the sample dispensing arm 16 is moved onto the disposable container 21, in which the pretreated sample exists, to suck the pretreated sample in this disposable container 21.

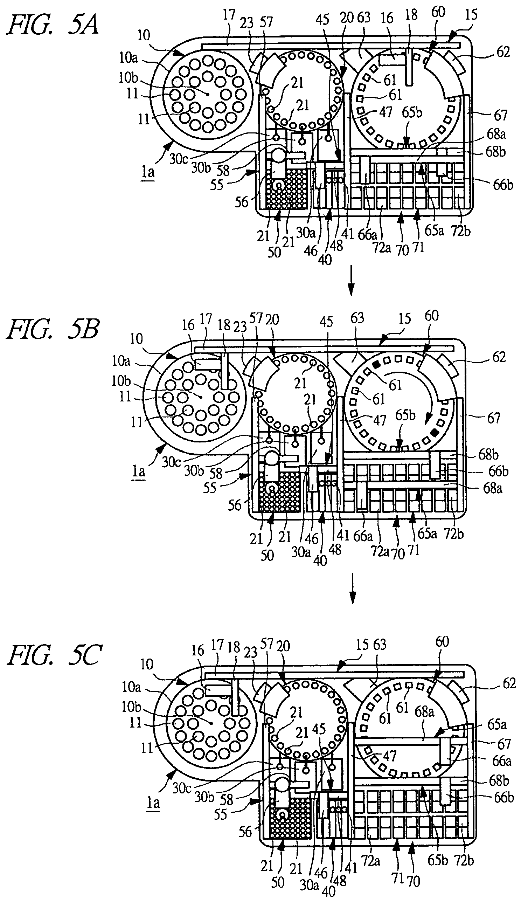

After the pretreated-sample suction, as shown in FIG. 5A, the sample dispensing arm 16 is moved onto the reaction vessel 61 of the reaction disk 60 to discharge the pretreated sample into this reaction vessel 61.

After the pretreated-sample discharge, as shown in FIG. 5B, the reaction disk 60 rotates clockwise (see an arrow in the drawing) to move the pretreated sample of the reaction vessel 61 (the pretreated sample being at blackly-filled positions in the drawing in which both of the positions before and after the movement are filled with a black color for convenience of understanding) . Also, by the depth-direction rails 47 and 67, the width-direction rail 68a, and others, the first reagent dispensing arm 66a of the first reagent dispensing mechanism 65a is moved onto the first reagent retaining unit 72a of the reagent cassette 71 arranged in the biochemical-test reagent retaining area 70. And, the first reagent retained in this first reagent retaining unit 72a is suctioned.

After the pretreated-sample movement and the first-reagent suction, as shown in FIG. 5C, the first reagent dispensing arm 66a is moved onto the reaction vessel 61, in which the pretreated sample exists, to discharge the first reagent into this reaction vessel 61.

After the first-reagent discharge, although the showing is omitted, the second reagent dispensing arm 66b is moved onto the second reagent retaining unit 72b as required. And, after sucking the second reagent, the second reagent dispensing arm 66b is moved onto the reaction vessel 61, in which the pretreated sample and the first reagent exist, to discharge the second reagent into this reaction vessel 61. Note that the second-reagent dispensing is normally carried out after about 5 minutes from the first-reagent discharge.

As described above, the reaction liquid obtained after the reaction of the sample with the first reagent and with the second reagent as required is moved to the light-measuring mechanism 62 by the rotation of the reaction disk 60, and is analyzed. After the analysis is finished, the reaction vessel 61 is rinsed by the rinsing mechanism 63. Also, the disposable container 21 is rinsed by the rinsing mechanism 23, or is conveyed to the disposable-container storage unit 50 by the container gripping arm 56 of the disposable-container conveying mechanism 55, and then, is disposed thereto.

In the biochemical test which does not require the pretreatment, the almost similar operations to those of the biochemical test which requires the pretreatment are carried out except for the operations shown in FIGs. 3B to 4C, that is, except that the sample is directly dispensed from the sample container 11 to the reaction vessel 61.

In the flow-based analysis such as the immunoserological test, the operations of FIGs. 3A to 4A are similar to those of the biochemical test which requires the pretreatment except that a test reagent for the flow-based analysis instead of the pretreatment liquid is dispensed and mixed with the sample. And, after the reaction of the sample with the flow-based analysis reagent, as shown in FIG. 6, the reaction liquid is suctioned by the flow-based analysis mechanism 30b in the drawing example.

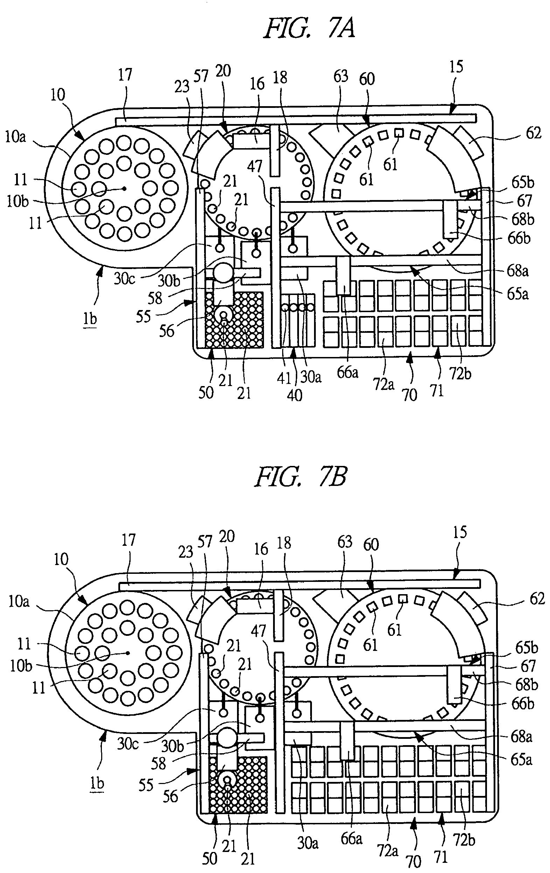

Here, in the examples explained with reference to FIGs. 1 to 6, as the reagent dispensing mechanism, total three reagent dispensing mechanisms of the pretreatment-liquid/others dispensing mechanism 45 and the first and second regent dispensing mechanisms 65a and 65b are provided. However, the number of reagent dispensing mechanisms is not limited to this, and may be arbitrarily increased or decreased. If the number thereof is decreased, the device can be further simplified, and, if the number thereof is increased, a processing efficiency can be further improved. Such a mode example in which the number of the reagent dispensing mechanisms is changed is explained. FIGs. 7 to 9 are schematic plan views each showing an outline of an embodiment of an automatic analysis device of the present invention in which the number of reagent dispensing mechanisms is changed.

Both of automatic analysis devices 1b and 1c shown in FIGs. 7A to 8B are examples in which the reagent dispensing mechanism 65a (65b) is commonly used between the intermediate disk 20 and the reaction disk 60.

The automatic analysis device 1b shown in FIG. 7A includes only two reagent dispensing mechanisms of the first and second reagent dispensing mechanisms 65a and 65b, and they function also as the pretreatment-liquid/others dispensing mechanism of the automatic analysis device 1a shown in FIG. 1, so that the first and second reagent dispensing mechanisms are also used for the dispensing of the pretreatment liquid or the flow-based analysis reagent in the intermediate disk 20. That is, the reagent dispensing mechanism is commonly used among the test mechanisms for the plurality of items.

The automatic analysis device 1b can mainly arbitrarily select two dispensing modes to dispense the reagent.

The first one is the mode in which both of the first and second reagent dispensing mechanisms 65a and 65b function as a flow-based analysis reagent/others dispensing mechanism. In this mode, while the first reagent dispensing mechanism 65a carries out the first-reagent dispensing and the second reagent dispensing mechanism 65b carries out the second-reagent dispensing, both of them also carry out the dispensing of the flow-based analysis reagent or others in an orderly sequence such as alternate order. That is, they are commonly used between the dispensing of the biochemical-test reagents and the dispensing of the flow-based analysis reagent or others. And, in either one of the first and second reagent dispensing mechanisms 65a and 65b, if a timing of the dispensing of the flow-based analysis reagent or others is overlapped with a timing of the dispensing of the first or second reagent, which is a primary task, the flow-based analysis reagent or others is dispensed by another reagent dispensing mechanism whose dispensing timing is not overlapped. At this time, if the above-described dispensing timing is overlapped in both of the first and second reagent dispensing mechanisms 65a and 65b, the priority is put on the dispensing of the first and second reagents which are the reagents for the biochemical test having the large number of test requests.

The other mode is the mode in which either of the first and second reagent dispensing mechanisms 65a and 65b is functioned as only the flow-based analysis reagent/others dispensing mechanism. In this mode, either one of the first and second reagent dispensing mechanisms 65a and 65b carries out the dispensing of the flow-based analysis reagent or others, and the other carries out the dispensing of both of the first and second reagents. In this manner, the above-described overlap of the dispensing timing can be prevented.

Also, only either one of the first and second reagent dispensing mechanisms 65a and 65b may carry out dispensing of both of the biochemical-test reagent and the flow-based analysis reagent or others.

As shown in FIG. 7B, in the automatic analysis device 1b, the pretreatment-liquid-container/others storage unit is not provided, and the reagent cassette 71 may be commonly used as the pretreatment-liquid container or others by making the reagent cassette 71 on the intermediate disk 20 side of the biochemical-test reagent retaining area 70 retain the pretreatment liquid and the flow-based analysis reagent. In this manner, the number of components forming the device is decreased, and therefore, a cost of the device can be reduced. Note that the biochemical-test reagent retaining area 70 may be commonly used as described above as the reagent disk.

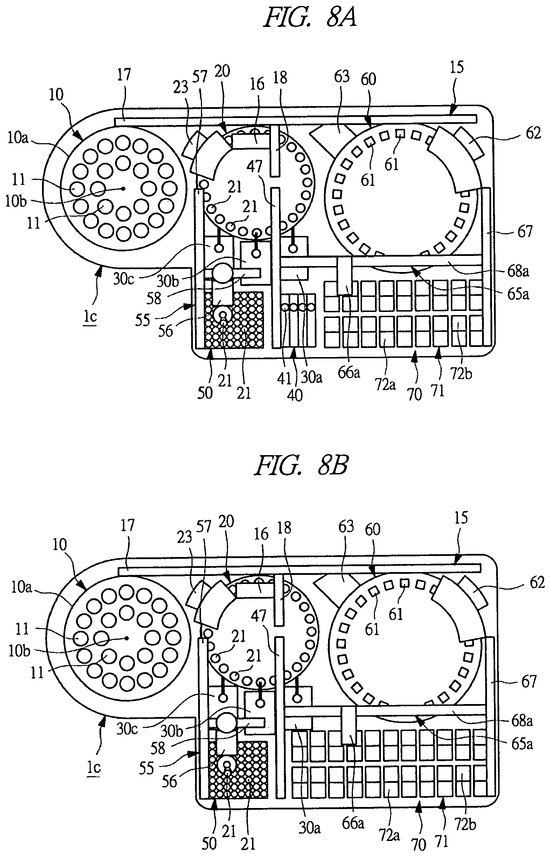

The automatic analysis device 1c shown in FIG. 8A includes only one reagent dispensing mechanism of the first reagent dispensing mechanism 65a, so that the reagent dispensing mechanisms are further commonly used.

In the automatic analysis device 1c, it is needless to say that the first reagent dispensing mechanism 65a carries out the dispensing of all of the first and second reagents for the biochemical test and the flow-based analysis reagent or others. If the dispensing timing of the biochemical-test reagent is overlapped with that of the flow-based analysis reagent or others, the priority is put on the dispensing of the first and second reagents similarly to the automatic analysis devices 1b shown in FIGs. 7A and 7B.

Also in the automatic analysis device 1c, similarly to the automatic analysis device 1b, the reagent cassette 71 may be commonly used as the pretreatment-liquid container or others in order to reduce the cost of the device, as shown in FIG. 8B.

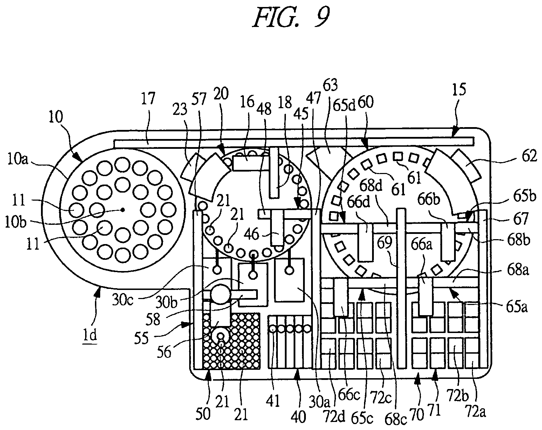

Conversely to the automatic analysis devices 1b and 1c, the automatic analysis device 1d shown in FIG. 9 includes not only the first and second reagent dispensing mechanisms 65a and 65b but also third and fourth reagent dispensing mechanisms 65c and 65d as the reagent dispensing mechanisms for dispensing the reagent into the reaction vessel 61 of the reaction disk 60.

Similarly to the first and second reagent dispensing mechanisms 65a and 65b, the third and fourth reagent dispensing mechanisms 65c and 65d include: third and fourth reagent dispensing arms 66c and 66d; and width-direction rails 68c and 68d for sliding the arms in the width direction of the device, respectively.

A depth-direction rail 69 is provided between the width-direction rails 68a and 68b and between the width-direction rails 68c and 68d, and the depth-direction rail 69 is shared among the first to fourth reagent dispensing mechanisms 65a to 65d.

The paired biochemical-test reagent retaining areas 70 are provided so as to be separated into two areas via the depth-direction rail 69. In the reagent cassette 71 on the third and fourth reagent dispensing mechanisms 65c and 65d sides, a third reagent retaining unit 72c for retaining a third reagent and a fourth reagent retaining unit 72d for retaining a fourth reagent are formed similarly to the first and second reagent retaining units 72a and 72b. That is, the automatic analysis device 1d includes the reagent dispensing mechanisms 65a to 65d dedicated to the biochemical-test reagent retaining areas 70.

Note that, in the automatic analysis device 1d shown in FIG. 9, for example, the reaction disk 60 may be separately provided for each of the biochemical-test reagent retaining areas 70, or the biochemical-test reagent retaining areas 70 may be provided on both sides of the reaction disk 60 as the reagent disks.

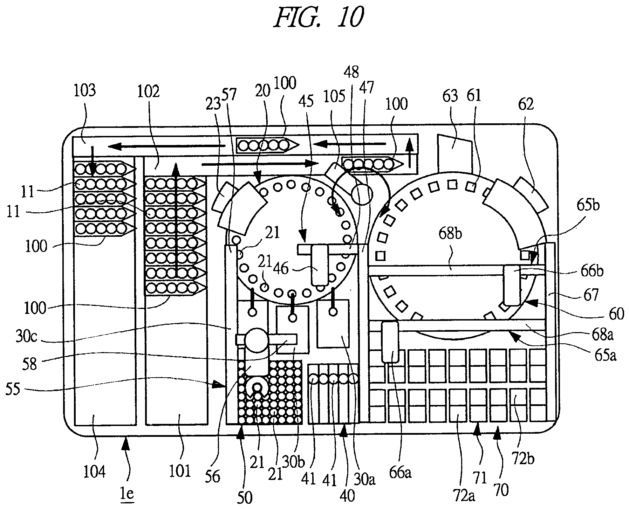

Also, regarding supply of the sample retained in the sample container 11, instead of arranging the sample container 11 on the disk, the sample container may be conveyed with being mounted on a rack. FIG. 10 is a schematic plan view showing an outline of an embodiment of an automatic analysis device of the present invention with including the sample racks (racks).

An automatic analysis device 1e shown in FIG. 10 includes: sample racks 100; a rack injecting unit 101; a rack advancing mechanism 102; a rack returning mechanism 103; and a rack storing unit 104, which are as a mechanism of conveying the sample containers 11.

In the drawing example, the sample rack 100 mounts five sample containers 11 along the width direction of the device. In the rack injecting unit 101, the sample racks 100 are arranged so as to be aligned from the deep side of the device along the depth direction of the device.

The rack advancing mechanism 102 is provided on a deeper side of the device than the intermediate disk 20 so as to be linearly extended in the width direction thereof. The rack returning mechanism 103 is provided on a further deeper side of the device than the rack advancing mechanism 102 so as to be linearly extended in the width direction of the device as contacting with the rack advancing mechanism 102.

The rack storing unit 104 is provided on a width-direction edge side of the device further than the rack injecting unit 101, and the sample racks 100 are arranged therein so as to be aligned similarly to those in the rack injecting unit 104.

Also, in the automatic analysis device 1e, a sample dispensing arm 105 being functioned as the sample dispensing mechanism is rotatably provided in the vicinity of an intermediate position between the intermediate disk 20 and the reaction disk 60.

In the supply of the sample in the reagent container 11, first, the sample rack 100 on which the sample containers 10 are mounted is moved in a direction of a drawing arrow (hereinafter, simply referred to as "arrow"), and enters the rack advancing mechanism 102. In the rack advancing mechanism 102, the sample rack 100 is moved along the direction of the arrow, that is, a direction in which the rack advancing mechanism 102 is extended, to a movable range of the sample dispensing arm 105. Then, the sample dispensing arm 105 is rotated and moved upward/downward to approach the sample rack, suctions the sample in the sample container 11 on the sample rack 100, and discharges the sample into the container on the intermediate disk 20 or the reaction disk 60 in accordance with the test item.

The sample rack 100 with the sample container 11 whose sample has been suctioned and dispensing is finished is advanced to the vicinity of an edge portion of the rack advancing mechanism 102, and then, is moved in the direction of the arrow so as to enter the rack returning mechanism 103. In the rack returning mechanism 103, the sample rack 100 is moved to the vicinity of an edge portion in the direction of the arrow, that is, a reverse direction to the direction of the movement by the rack advancing mechanism 102. Finally, the sample rack 100 is moved in the direction of the arrow, and enters the rack storing unit 104 to be stored. Note that, in the rack storing unit 104, the sample rack is sequentially stored in the front side of the device so that the sample racks 100, which have already been stored, are pushed by a newly-entering sample rack 100.

In this manner, the sample rack 100 is conveyed to a predetermined position between the intermediate disk 20 and the reaction disk 60, and the sample dispensing arm 105 rotated and moved upward/downward is arranged so as to be accessible to the intermediate disk 20, the reaction disk 60, and the sample rack 100, so that the sample dispensing operation can be speeded up, and its mechanism can be simplified.

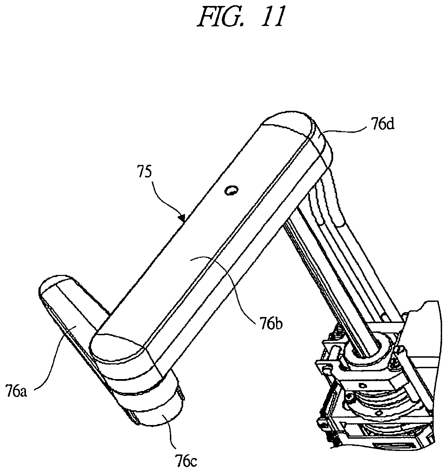

To the sample dispensing arm 105, for example, other publicly-known dispensing mechanism as shown in FIG. 11 can be applied. FIG. 11 is a principal-part schematic perspective view showing a modification example of the dispensing mechanism.

A dispensing mechanism 75 shown in FIG. 11 is a multiple-joint arm having a first joint 76a and a second joint 76b. The first joint 76a rotates around a joint part 76c jointed with the second joint 76b and used as a rotation axis to expand and contract a length of the arm, and besides, the second joint 76b rotates around a base end part 76d used as a rotation axis to turn the arm toward an arbitrary direction. By using this dispensing mechanism 75, the intermediate disk 20, the reaction disk 60, and the reagent retaining areas can be arranged in its movable range by this single arm.

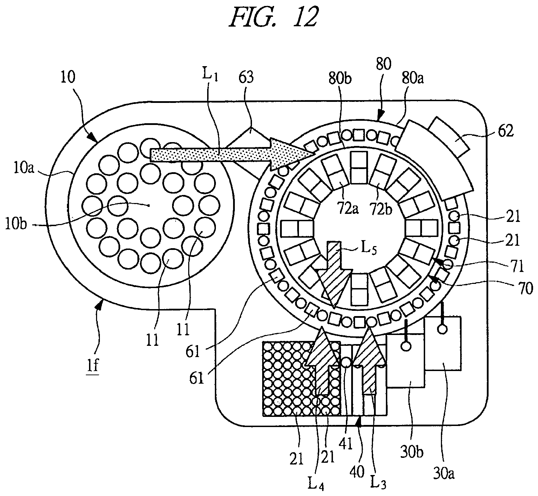

Also, by combining the intermediate disk as an intermediate unit and the reaction disk as a main analysis unit, the device may be further simplified. FIG. 12 is a schematic plan view showing an outline of an embodiment of an automatic analysis device of the present invention, in which the intermediate disk and the reaction disk are combined with each other.

An automatic analysis device If shown in FIG. 12 includes a common disk (the intermediate unit and the main analysis unit) 80 being functioned as both of the intermediate disk and the reaction disk. In the common disk 80, an analysis mechanism for the biochemical test such as the light-measuring mechanism 62 and the rinsing mechanism 63 is provided on an outer circumference 80a side, and the biochemical-test reagent retaining area 70 is provided as a disk on an inner circumference 80b side.

Along the circumferential direction of the common disk 80, the reaction vessels 61 and the disposable containers 21 are alternately arranged. Note that the reaction vessels 61 and the disposable containers 21 are alternately arranged in the drawing example from a viewpoint of easy control. However, an orderly arrangement such that the disposable container 21 is arranged for every two reaction vessels may be used. Also, the number of the arranged containers can be also arbitrarily increased or decreased as required.

In the case of the biochemical test which requires the pretreatment, the sample is pretreated in the disposable container 21, and then, is dispensed into either one of the adjacent reaction vessels 61 to be reacted with the reagent. Note that, in a case that the pretreatment is dilution, the sample may be dispensed into the reaction vessel 61 from the beginning because there is no risk of contamination.

In the cases of the biochemical test which does not require the pretreatment and the flow-based analysis, its process is almost the same as that of the automatic analysis device 1a. Each of the samples is dispensed into the reaction vessel 61 or the disposable container 21, and is reacted, and then, is analyzed by the light-measuring mechanism 62, or, in the drawing example, either one of two-provided flow-based analysis mechanisms 30a and 30b.

In the automatic analysis device If, regardless of a difference in the test item or with/without the pretreatment, the flows of the sample are collected by only the L₁, and the test efficiency can be improved by the decrease in the number of the patterns of the conveying path.

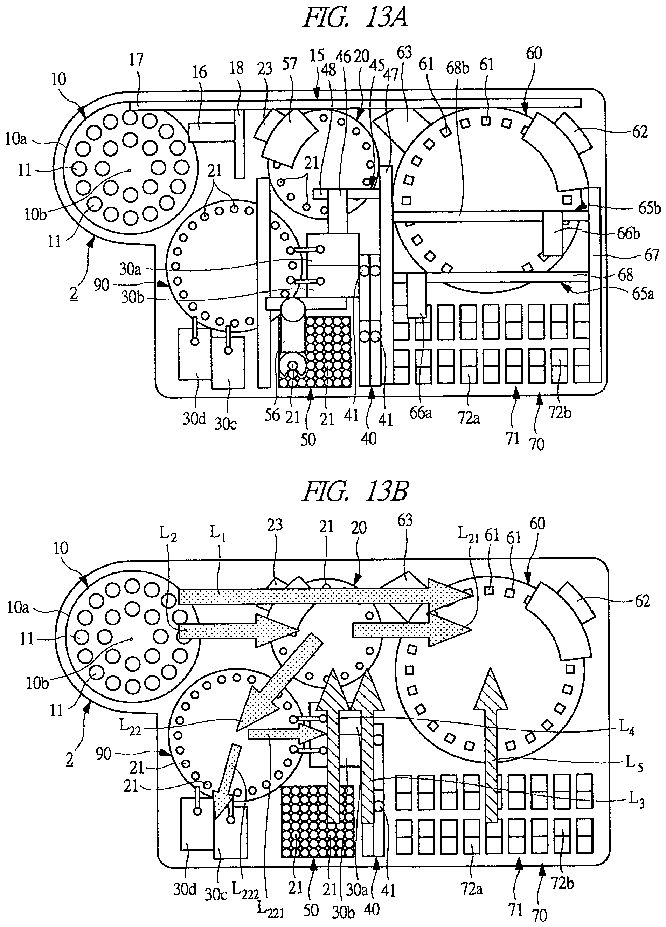

Further, each of the automatic analysis devices explained with reference to FIGs. 1 to 12 may include a standby disk (standby unit) between the intermediate disk 20 and the flow-based analysis mechanisms 30a to 30c. FIG. 13A is a schematic plan view showing an outline of an embodiment of an automatic analysis device of the present invention, in which the standby disk is provided, and FIG. 13B is a diagram showing its flow.

In the automatic analysis device 2 shown in FIGs. 13A and 13B, while the intermediate disk 20 is formed smaller than those of the above-described automatic analysis devices 1a to 1d, the standby disk 90 arranged between the intermediate disk 20 and the flow-based analysis mechanisms 30a to 30c is formed to have an approximately same size as the intermediate disks of the automatic analysis devices of other modes.

Also, the four flow-based analysis mechanisms 30a to 30d are provided. Among them, the flow-based analysis mechanisms 30a and 30b are arranged on a right edge side of the standby disk 90 and in the vicinity of the center of the device, and the flow-based analysis mechanisms 30c and 30d are arranged on a front end side of the standby disk 90 and a front side of the device.

Note that, due to the provision of the standby disk 90, the change of the number of the flow-based analysis mechanisms and their arrangement from those of the automatic analysis devices of other modes, and others, the disposable-container storage unit 50 is arranged to be shifted to the right side of the device, and besides, the pretreatment-liquid-container/others storage unit 40 is arranged to be vertically long in two columns, as compared with the automatic analysis device without the standby disk 90.

As shown in FIG. 13B, the flows of the samples and others in the automatic analysis device 2 are basically the same as those of the above-described automatic analysis devices 1a to 1d. However, the samples dispensed into the disposable containers of the intermediate disk 20 by the sample flow L₂ are separated into a sample flow L₂₁ to the reaction disk 60 for carrying out the biochemical test and a sample flow L₂₂ to the standby disk 90 for carrying out the flow-based analysis.

The sample dispensed into the disposable container of the standby disk 90 by the sample flow L₂₂ is reacted with the flow-based reagent, and then, is suctioned into the corresponding flow-based analysis mechanism by a flow L₂₂₁ to the flow-based analysis mechanism 30a or 30b or a flow L₂₂₂ to the flow-based analysis mechanism 30c or 30d.

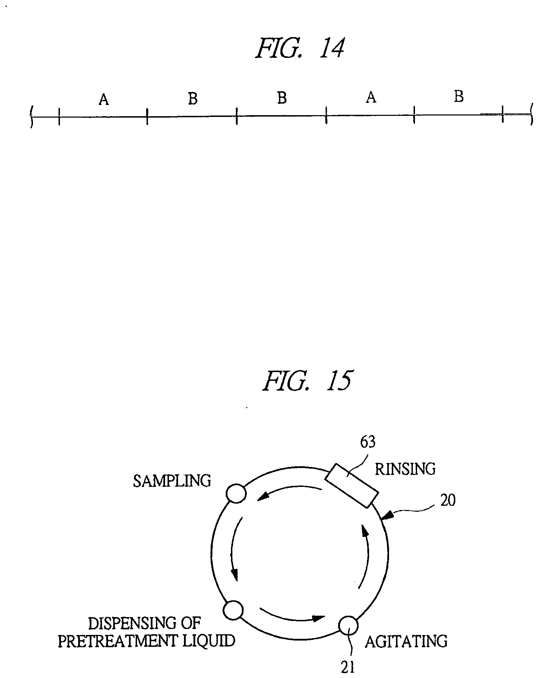

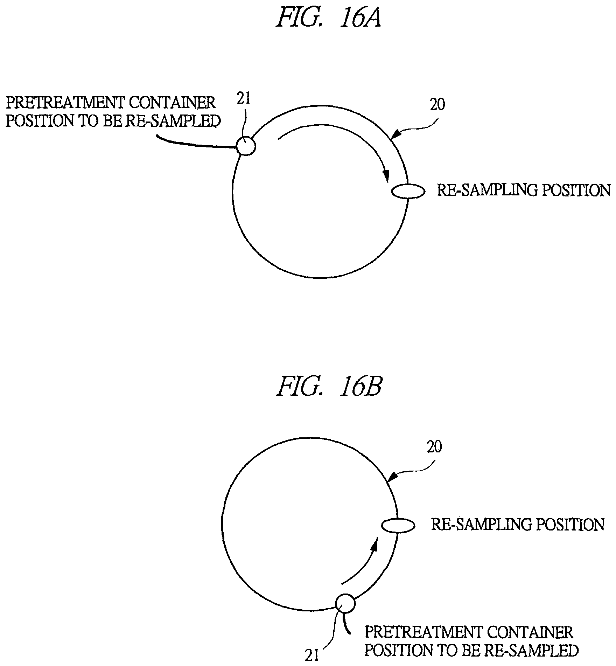

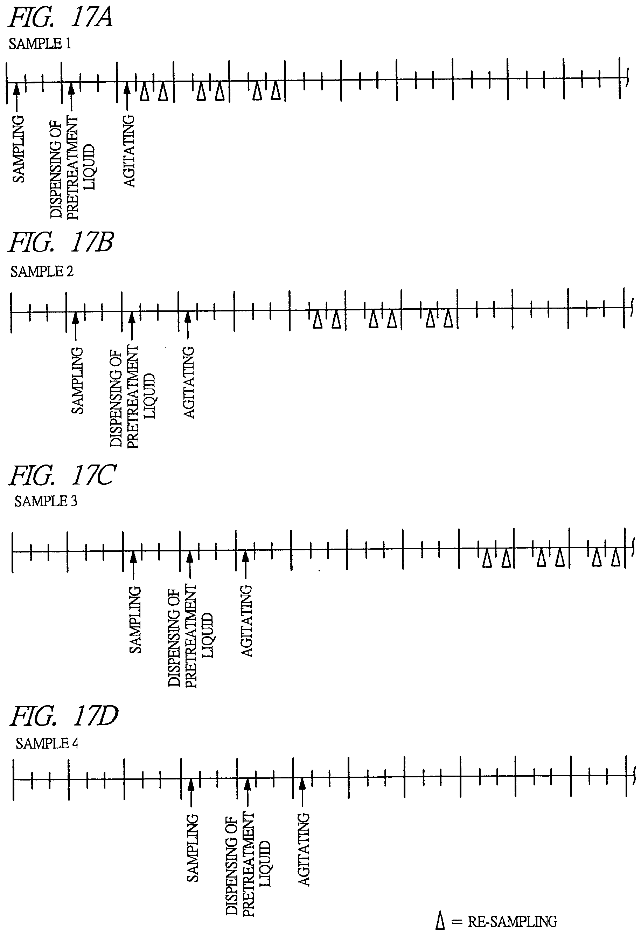

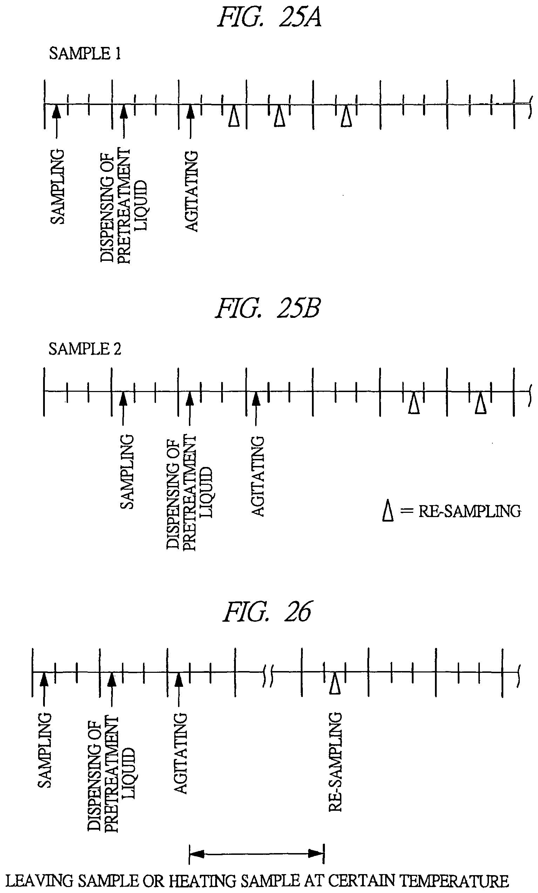

Subsequently, an operation cycle is explained with taking the cases of the automatic analysis devices 1a to 1d as an example. FIG. 14 is an explanatory diagram explaining a basic cycle, FIG. 15 is an explanatory diagram explaining a rotating operation of the intermediate disk in an A cycle, and FIGs. 16A and 16B are explanatory diagrams explaining a rotating operation of the intermediate disk in a B cycle. FIGs. 17A to 17D are explanatory diagrams explaining an operation in a case of taking the shortest cycle as the basic cycle of FIG. 14, and FIGs. 18 to 24 are diagrams each showing an example of a rotating operation of the intermediate disk in a case that 20 containers are arranged. FIGs. 25A and 25B are explanatory diagrams each explaining an example of an operation in a case that the operation cycles of "n = 2" and "n = 3" are combined, and FIG. 26 is an explanatory diagram explaining an operation in a case of requiring sample leaving or sample heating at a certain temperature in the pretreatment. Note that, in FIGs. 15, 16, and 18 to 24, the arrangement of the intermediate disk is intentionally arbitrarily omitted or changed for convenience of understanding.

As shown in FIG. 14, in the automatic analysis devices 1a to 1d, the basic cycle is obtained by combining the A cycle where the pretreatment operation is carried out at the intermediate disk and the B cycle where a re-sampling (sample re-dispensing) operation into the reaction disk or the flow-based analysis mechanism (analysis unit) is carried out. That is, each of the A cycle and B cycle is independently controlled by the control unit so that their cycle time periods are equal to each other, and, in this manner, the operation timing of the pretreatment and the operation timing to the analysis unit are uniformed. Note that, in the test item which does not require the pretreatment, the sample dispensing operation is carried out from the sample disk to the reaction disk, and the operation is intentionally referred to as "re-sampling" in order to distinguish the operation from the sample dispensing operation to the intermediate disk.

In the test item of the flow-based analysis, the A cycle corresponds to a dispensing operation of the flow-based analysis reagent to the intermediate disk 20. In the biochemical test which does not require the pretreatment, the A cycle may be allocated to the operation of the B cycle. This allocation is also similarly carried out for a case that the dispensing operation to the intermediate disk 20 is not carried out in the A cycle in the biochemical test which requires the pretreatment or the flow-based analysis test. Note that, in the example of FIG. 14, two B cycles are inserted after the A cycle in one basic cycle. However, the number of the B cycles inserted after the A cycle may be arbitrarily changed in accordance with the test item, the number of samples, and others.

As shown in FIG. 15, in the A cycle, the sampling (sample dispensing), the pretreatment-liquid dispensing, the agitating, and the rinsing are carried out in one cycle. The intermediate disk 20 rotates orderly in one direction at the number of steps having a common factor with a number obtained by adding one to the number of arranged containers such as "x" containers.

The B cycle is operated at a stage when the series of operations of the pretreatment up to the agitating in the A cycle is finished and the sample to be re-sampled is prepared. As shown in FIGs. 16A and 16B, in the B cycle, no matter where the container to be re-sampled next is at any position on the intermediate disk 20, the container is moved to the re-sampling position. A distance of the movement in this case is arbitrary. However, for the intermediate disk 20, both of the clockwise rotation shown in FIG. 16A and the counterclockwise rotation shown in FIG. 16B can be selected, so that the distance and the time of the movement can be shortened.

By such a basic cycle, the re-sampling operation is carried out for the time period of the B cycle having an optimal number of cycles in accordance with the content of the test-request item. That is, the operation-cycle time period for the re-sampling is n times the minimum operation-cycle time period. Here, the cycle-time periods of the A cycle and the B cycle are the same as each other. Therefore, in a test item carried out via the intermediate disk 20, the re-sampling operation-cycle time period corresponds to n times the rotating operation-cycle time period of the intermediate disk 20. Note that "n" can contain an intermediate value between integer numbers such as 1.5. However, in consideration of controllability, it is preferably an integer number.

When the above-described basic cycle is taken as the shortest cycle of "n = 1", the operations shown in FIG. 15 are carried out in the intermediate disk 20.

First, in an initial (first) A cycle, as shown in FIG. 17A, an initial sample (sample 1) is sampled.

In a next (second) A cycle, as shown in FIGs. 17A and 17B, the pretreatment liquid is dispensed into the sample 1, and besides, a sample 2 following the sample 1 is sampled.

In a third A cycle, as shown in FIGs. 17A to 17C, the sample 1 is agitated, and besides, the pretreatment liquid is dispensed into the sample 2. And, a sample 3 following the sample 2 is sampled. Also, the sample 1 is re-sampled in two B cycles following this third A cycle in the same basic cycle. Note that, in the drawing example, since there are six biochemical-test items, the sample 1 is re-sampled also in two B cycles in next and further next basic cycles.

In a fourth A cycle, as shown in FIGs. 17B to 17D, the sample 2 is agitated, and besides, the pretreatment liquid is dispensed into the sample 3. And, a sample 4 following the sample 3 is sampled. Note that the sample 2 is not re-sampled in the B cycle following this fourth A cycle in the same basic cycle because the sample 1 is re-sampled.

In a fifth A cycle, as shown in FIGs. 17C and 17D, the sample 3 is agitated, and besides, the pretreatment liquid is dispensed into the sample 4. And, a sample following the sample 4 is sampled although the showing is omitted. Note that the samples 2 and 3 are not re-sampled also in the B cycle following this fifth A cycle in the same basic cycle because the sample 1 is re-sampled.

In a sixth A cycle, as shown in FIG. 17D, the sample 4 is agitated. And, the dispensing of the sample which is not shown following the sample 4 or the pretreatment-liquid dispensing thereof is carried out. Also, as shown in FIG. 17B, in two B cycles following this sixth A cycle in the same basic cycle, the sample 2 is re-sampled. Note that, similarly to the sample 1, the sample 2 is re-sampled also in two B cycles in next and further next basic cycles. Therefore, in B cycles during this time period, the sample 3 and the sample 4 are not re-sampled.

And, as shown in FIG. 17C, in B cycles in next three basic cycles after the re-sampling of the sample 2 is finished, the sample 3 is re-sampled.

In this manner, the sampling, the pretreatment-liquid dispensing, the agitating, and the re-sampling are sequentially repeated.

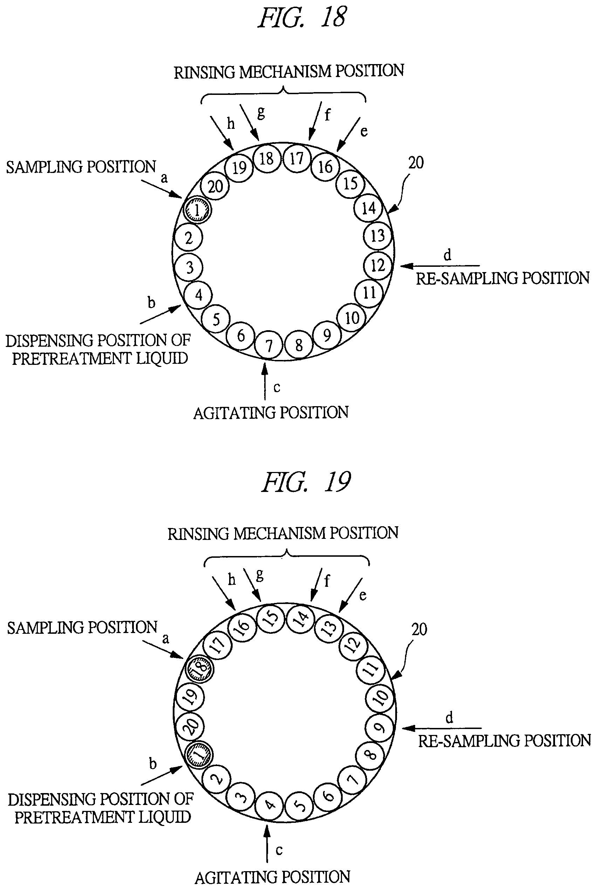

For example, when 20 containers are arranged on the intermediate disk 20, in the above-described shortest cycle, the rotating operations as shown in FIGs. 18 to 24 are carried out in the intermediate disk 20.

First, as shown in FIG. 18, at the timing of the A cycle, the sampling is carried out to a container numbered as "1" at a position of "a".

After the sampling, as shown in FIG. 19, at the timing of the next A cycle, the intermediate disk 20 rotates counterclockwise by three-container positions to dispense the pretreatment liquid into the container numbered as "1" at a position of "b", and besides, carry out the sampling to a container numbered as "18" at the position of "a".

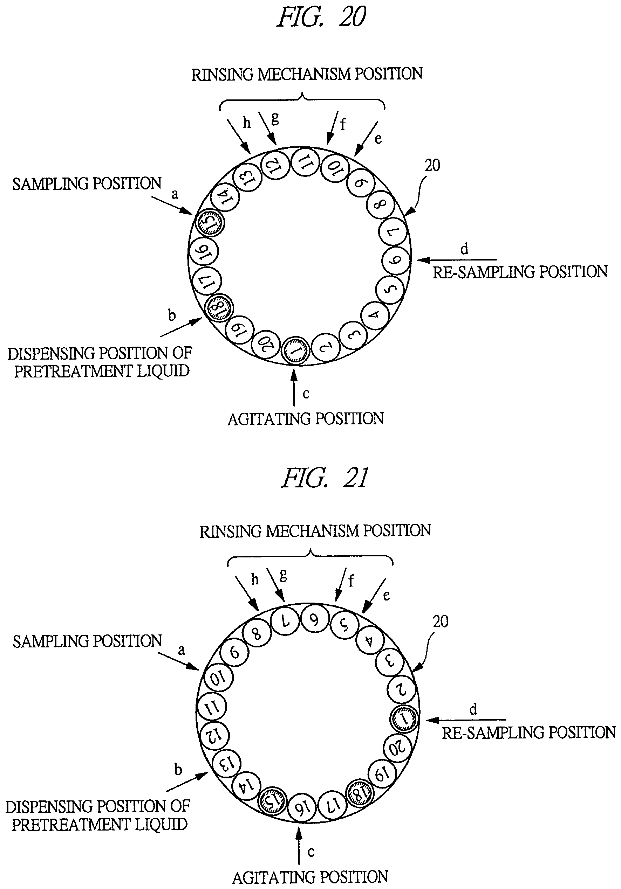

After the operation of FIG. 19, as shown in FIG. 20, at the timing of the further next A cycle, the intermediate disk 20 rotates counterclockwise by three-container positions to agitate the sample in the container numbered as "1" at a position of "c", and besides, dispense the pretreatment liquid into the container numbered as "18" at the position of "b". And, the sampling is carried out to a container numbered as "15" at the position of "a".

After the operation of FIG. 20, as shown in FIG. 21, at the timing of the B cycle, the container numbered as "1" is moved to a position of "d" by the rotation of the intermediate disk 20 to carry out the re-sampling at this position.

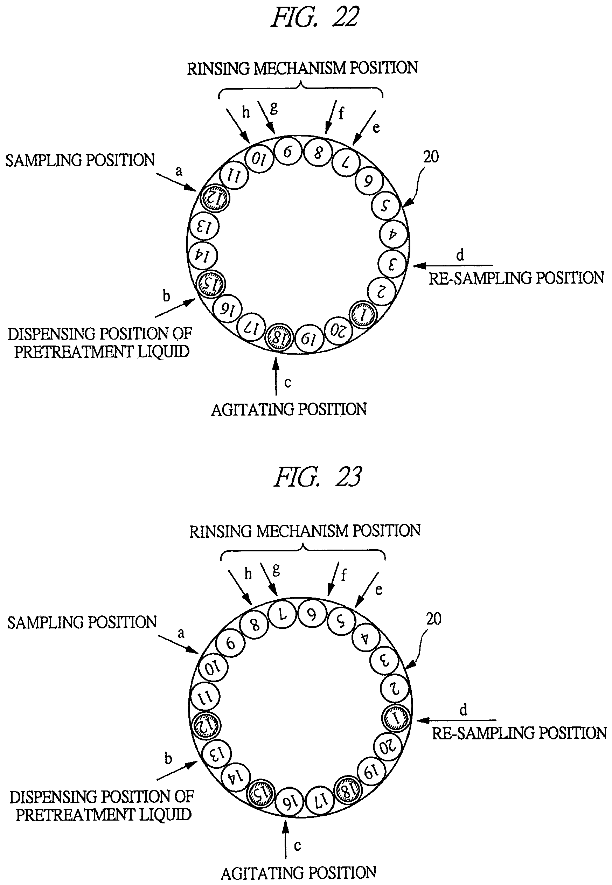

After the re-sampling, as shown in FIG. 22, at the timing of the next A cycle again, the container numbered as "18" is moved to the position of "c" by the rotation of the intermediate disk 20 to agitate the sample at this position, and besides, dispense the pretreatment liquid into the container numbered as "15" at the position of "b". And, the sampling is carried out to a container numbered as "12" at the position of "a".

After the operation of FIG. 22, as shown in FIG. 23, at the timing of the B-cycle, the container numbered as "1" is returned to the position of "d" by the rotation of the intermediate disk 20 to carry out the re-sampling similarly to FIG. 21.

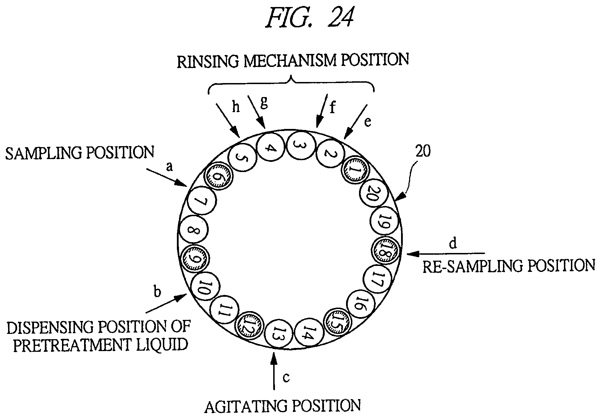

At the B cycle in the next basic cycle after the re-sampling from the container numbered as "1" is finished, as shown in FIG. 24, the container numbered as "18" is moved to the position of "d" by the rotation of the intermediate disk 20 to be re-sampled at this position. Also, in this state, the sample agitating has been already finished in the containers numbered as "15" and "12", the pretreatment-liquid dispensing has been already finished in the container numbered as "9", and the sampling has been already finished in the container numbered as "6".

Note that, to the containers of which the re-sampling has been finished, at the timing of the A cycle, the sample suction, the rinsing-liquid discharge, the rinsing, and the rinsing-liquid suction are sequentially carried out as required at positions of "e" to "h" by the rinsing mechanism not shown.

Also, for example, when the operation-cycle time period for the re-sampling in the sample 1 is set to twice (n = 2) the minimum operation-cycle time period and that in the sample 2 is set to three times (n = 3) the minimum operation-cycle time period, the intermediate disk 20 is operated as shown in FIGs. 25A and 25B.

That is, in the A cycle, similarly to the case of the shortest cycle, the sampling, the pretreatment-liquid dispensing, and the agitating are sequentially carried out. On the other hand, in the B cycle, as shown in FIG. 25A, first re-sampling is carried out in the latter B cycle of the two B cycles in the same basic cycle as the A cycle where the agitating of the sample 1 has been carried out. In this manner, it is prevented not to overlap the next re-sampling with the A cycle in the next basic cycle.

The next re-sampling of the sample 1 is carried out in the first B cycle in the next basic cycle to the basic cycle where the first re-sampling has been carried out. And, further next re-sampling is shifted to the first B cycle in the same basic cycle because of the overlap with the A cycle.

As shown in FIG. 25B, to the sample 2, the first re-sampling is carried out in the B cycle in the next basic cycle where the re-sampling of the sample 1 has been finished. And, the re-sampling is carried out sequentially in the first B cycle in the basic cycle because a cycle interval of the sample 2 is not overlapped with the A cycle.

If it is required to leave the sample or heat it at a certain temperature in the pretreatment, as shown in FIG. 26, the sampling, the pretreatment-liquid dispensing, and the agitating are sequentially carried out at the A cycle similarly to the case of the shortest cycle. On the other hand, at the B cycle, the re-sampling is not carried out until a determined pretreatment time period passes. And, the re-sampling is carried out at the timing of the B cycle after the pretreatment time period passes.

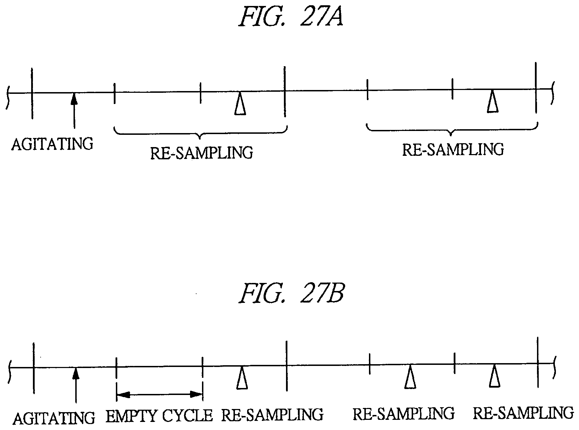

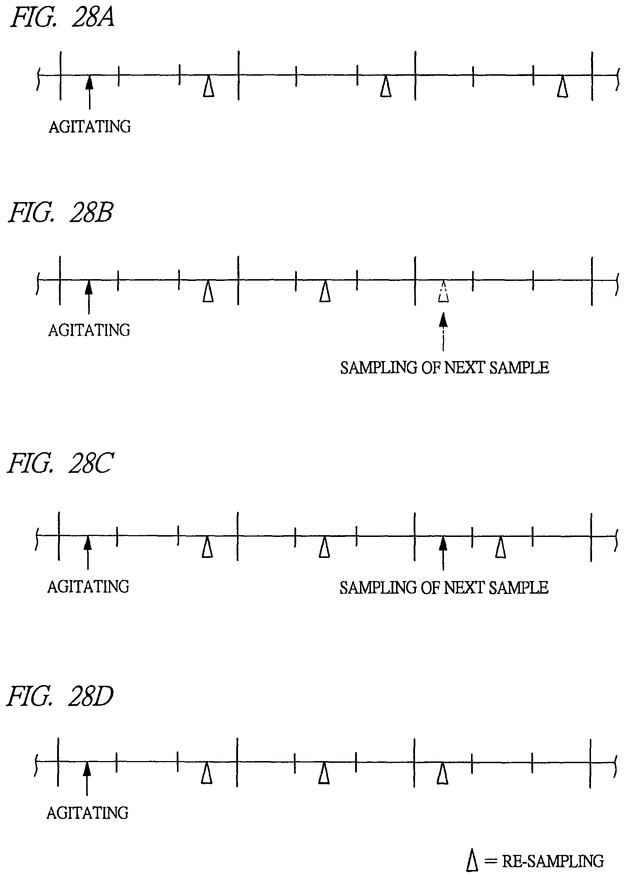

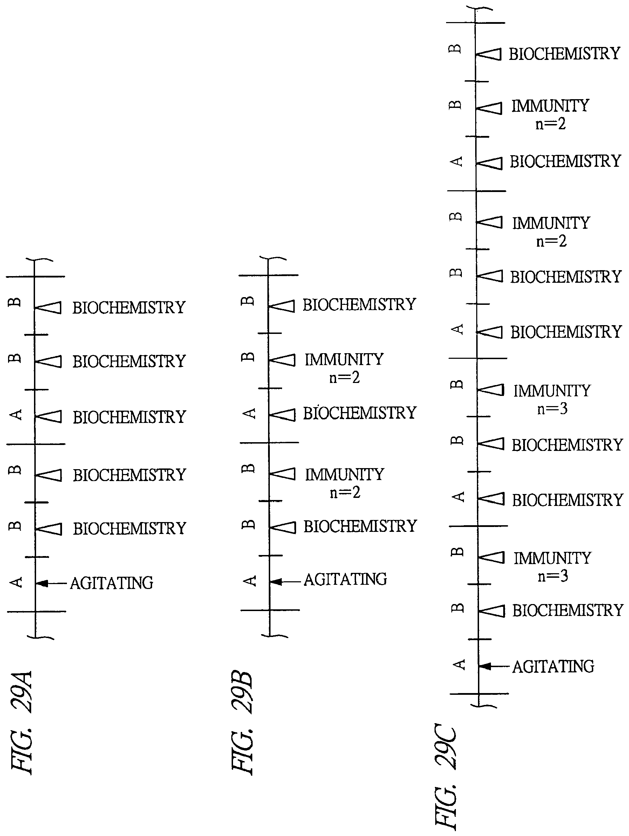

Subsequently, an operation example of each test item is explained. FIGs. 27A and 27B are explanatory diagrams each explaining an operation example in the biochemical test, FIGs. 28A to 28D are explanatory diagrams each explaining an operation example in the immunoserological test, and FIGs. 29A to 29C are explanatory diagrams each explaining an operation example in a case that the biochemical test and the immunoserological test are combined.

In the item of the biochemical test, normally, the pretreatment time period is not limited, and the operation cycle of the re-sampling is short, and therefore, its operation cycle time period requires only the minimum operation-cycle time period (n = 1). However, in some cases, an amount of the sample is large, and suction of the sample takes time, and therefore, the sample dispensing is not finished within the minimum operation-cycle time period. In that case, as shown in FIG. 27A, the operation-cycle time period for re-sampling is set to twice the minimum operation-cycle time period (n = 2).

Also, in order to avoid the carry over of a reagent probe (not shown) in the reagent dispensing after the re-sampling, it is required to rinse the reaction vessel 61 of the reaction disk 60 shown in FIG. 1 or others in some cases. In that case, as shown in FIG. 27B, an empty cycle where the re-sampling is not carried out is previously set in the B cycle, and the empty cycle is used for rinsing the reaction vessel. And, the re-sampling is carried out in the next B cycle to the empty cycle.

In the immunoserological test, in an analysis principle, its operation cycle for the re-sampling is longer than that of the biochemical test, and therefore, the operation-cycle time period is set to twice (n ≥ 2) the minimum operation-cycle time period or longer.

For example, when it is set to "n = 3", as shown in FIG. 28A, the timing of the re-sampling is not overlapped with the A cycle. Note that, in the drawing example, the re-sampling is carried out in the latter B cycle in the basic cycle from a viewpoint of timing controllability for the re-sampling. However, the re-sampling may be carried out in the first B cycle in the same cycle.

On the other hand, when it is set to "n = 2", as shown in FIG. 28B, the timing of the re-sampling is sometimes overlapped with the sampling operation of a next sample in the A cycle. In that case, as shown in FIG. 28C, a priority is put on the sampling of the next sample in the corresponding A cycle, and the re-sampling is shifted by one cycle and carried out in the first B cycle in the same basic cycle as the corresponding A cycle.

Also, even when it is set to "n = 2", if the sampling operation of the next sample is not inserted in the A cycle, as shown in FIG. 28D, the re-sampling is carried out as following the cycle of "n = 2" even in the A cycle.

The operation example in the immunoserological test can be similarly applied to the test item of other flow-based analysis such as the blood coagulation test.

For example, when the biochemical test is continuously requested as shown in FIG. 29A, by the operation cycle explained above, the re-sampling of the biochemical test is continuously carried out so as to also include the A cycle without the sampling of the next sample.

Also, when the biochemical test and the immunoserological test which is set to "n = 2" are requested, as shown in FIG. 29B, the re-sampling of the biochemical test and the immunoserological test is alternately carried out.

And, when the biochemical test and the immunoserological tests which are set to "n = 2 and 3" are requested, as shown in FIG. 29C, for the re-sampling between the immunoserological tests, a necessary number of cycles are set to the empty cycles such as one cycle if "n = 2" and two cycles if "n = 3", and the re-sampling of the biochemical test is carried out during the cycles. Note that both of FIGs. 29B and 29C show examples of a case that there is no sampling of the next sample in the A cycle.

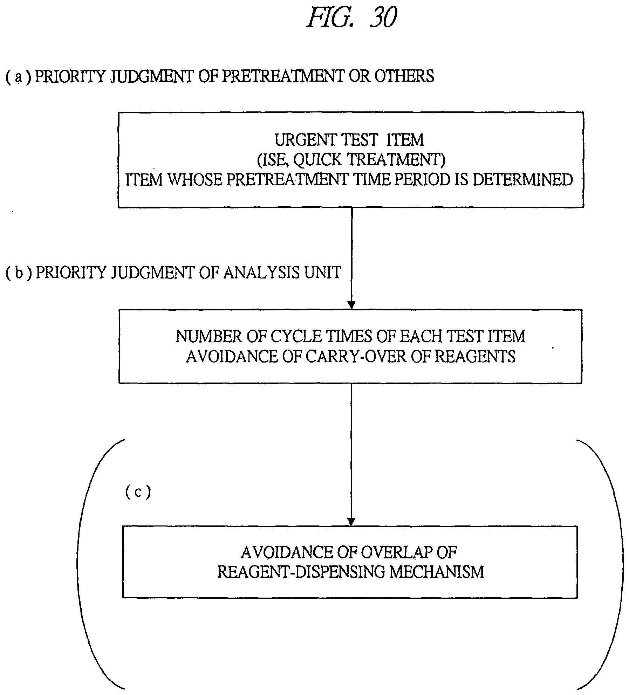

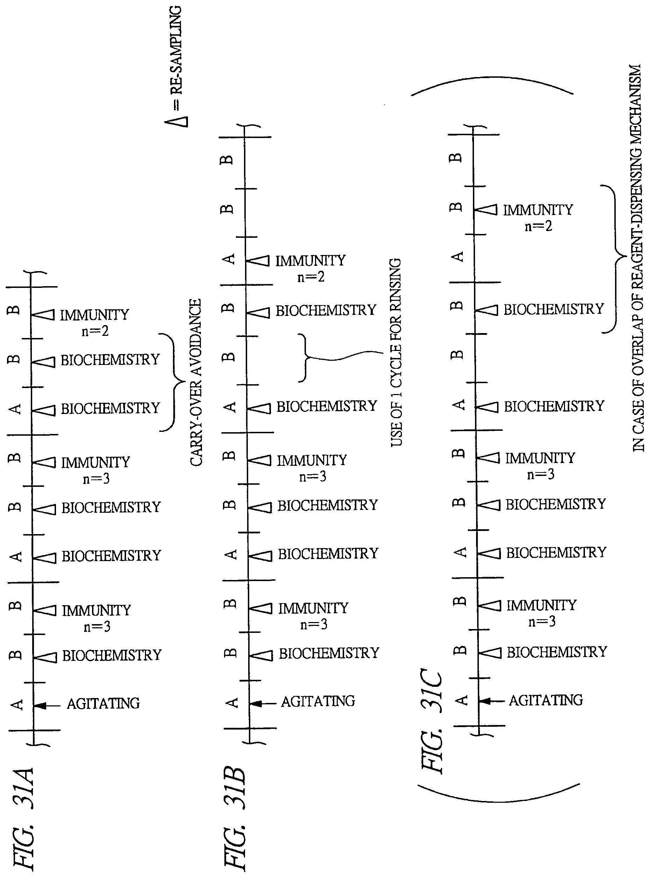

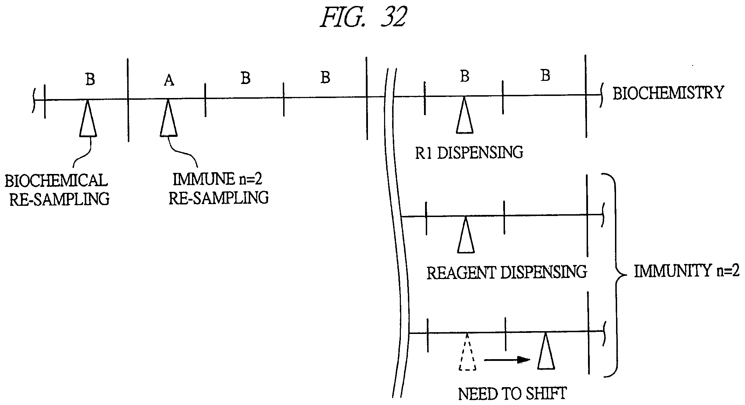

Such a control of the operation cycle is carried out in accordance with priority judgment based on various conditions. Hereinafter, the priority judgment is explained. FIGs. 30A to 30C are flowcharts each showing a flow of the priority judgment, FIGs. 31A to 31C are explanatory diagrams each explaining an operation example in accordance with the priority judgment, and FIG. 32 is an explanatory diagram explaining the overlap of the reagent dispensing mechanisms.

First, as shown in FIG. 30A, regarding the pretreatment and the reagent dispensing on the intermediate disk, it is judged whether or not there are (i) an urgent test item such as an item to which an electrolyte test (ISE) or quick treatment is requested, and (ii) a test item whose pretreatment time period is determined in order to require to leave the sample or heat it at a certain temperature. If there are these items, the items are treated as a priority in an order of (i) to (ii).

Next, as shown in FIG. 30B, it is judged how many times longer the operation-cycle time period for the re-sampling of each test item to the test mechanism is than the minimum operation-cycle time period, that is, what the number "n" of cycle times of each analysis unit is. Besides, necessity of avoiding the carry over of the reagent in the analysis unit is judged. And, the test item having the large number "n" is treated as the priority, and besides, if the necessity of avoiding the carry over of the reagent is required, the empty cycle is previously set.

Also, similarly to the automatic analysis devices 1b and 1c shown in FIGs. 7A to 8B, when the reagent dispensing mechanism 65a (65b) is commonly used between the intermediate disk 20 and the reaction disk 60, as described above, the reagent timing of the reagent dispensing mechanism 65a (65b) overlaps on the reaction disk 60 and the intermediate disk 20 sometimes after the re-sampling. In that case, as shown in FIG. 30C, it is judged whether or not there is the overlap of the reagent dispensing mechanism, and, if there is the overlap, the empty cycle is previously set before the re-sampling in order to avoid that.

In a case that the biochemical test has five items including one case of the necessity of avoiding the carry over and the immunoserological test has three items (two items as "n = 3" and one item as "n = 2"), an example in accordance with the priority judgment is explained. Note that this example is a case that, in any of A cycles, the sampling of the next sample is not carried out.

As shown in FIG. 31A, when the necessity of the avoidance of the carry over of the reagent is judged in the fourth item and the fifth item of the biochemical test, as shown in FIG. 31B, the empty cycle for rinsing the container is set between the fourth item and the fifth item of the biochemical test, and the re-sampling of the fifth item is shifted by one cycle.

Also, in this example, the reagent dispensing mechanism is commonly used between the intermediate disk and the reaction disk, and, for example, as shown in FIG. 32, in some cases, the timing of the dispensing of the first reagent (R1) in the fifth item of the biochemical test and the dispensing for the item of the immunoserological test as "n = 2" is overlapped with each other after the re-sampling, and therefore, it is adversely required to shift the timing of the latter one. In that case, as shown in FIG. 31C, in order to avoid the overlap of the reagent dispensing mechanism, the timing of the re-sampling for the immunoserological test is previously shifted by one cycle.

As described above, the operation cycles of the automatic analysis devices 1a to 1d have been explained as the example. However, those of the automatic analysis devices 1e and 1f are operated by the same basic cycle, and therefore, are almost the same as them except for adding the control for setting the disposable container 21 in the A cycle.

Also, those of the intermediate disk 20 and the standby disk 90 of the automatic analysis device 2 are almost the same as them except for adding the control for the sample dispensing from the intermediate disk 20 to the standby disk 90 in the A cycle of the intermediate disk 20 and for not requiring to consider the control for the flow-based analysis in the intermediate disk 20 and the biochemical test in the standby disk 90.

In this manner, each of the automatic analysis devices 1a to If and 2 of the present invention includes the intermediate disk 20 (or the common disk 80) which is a mechanism commonly usable among test items, and therefore, a predetermined treatment required for the analysis can be carried out for the sample in the test for any item by the intermediate disk 20 or others. In this manner, the sample can be dispensed from one intermediate unit to each analysis unit, and therefore, the device configuration can be simplified. Besides, the number of patterns of the conveying paths for the samples is decreased, and the control becomes easy, and therefore, the test efficiency can be improved. And, by providing such an intermediate unit, it is easy to advance the common usage of the dispensing mechanism or the retaining unit for the reagent or others among test items, and therefore, the redundant device configuration can be simplified.

Also, in the biochemical test which is the item having the relatively large number of test requests, the reaction disk 60 which is the dedicated mechanism for carrying out the analysis for the reaction of the target sample with the reagent and the analysis after the reaction is provided, and therefore, its space is not interrupted by the reaction of the flow-based analysis which is the item having the relatively small number of test requests, and its test path is ensured. Therefore, high test efficiency can be maintained.

Further, in the biochemical test, the item which does not require the pretreatment has the larger number of test requests than the item which requires the pretreatment. However, in the item which does not require the pretreatment, the test for each test item is carried out without via the intermediate disk 20 which is the common mechanism, and therefore, the test is not interrupted by the treatment for the item which requires the pretreatment or the item such as the flow-based analysis having the small number of test requests. Also in this point, the high test efficiency can be maintained.

Still further, similarly to the automatic analysis device 2 shown in FIGs. 13A and 13B, by providing the standby disk 90 and arranging the disposable containers also on the standby disk 90 similarly to the intermediate disk 20, in carrying out the flow-based analysis, the timing of the re-sampling for the biochemical test and the flow-based analysis is not overlapped with each other on the intermediate disk 20. In this manner, the intermediate disk 20 can be used as the disk dedicated to the pretreatment of the biochemical test having the relatively large number of test requests, and can carry out the operation as close to the shortest cycle. Therefore, the test efficiency of the biochemical test to be the main test of the automatic analysis device can be improved.

Moreover, since the intermediate disk 20 can be downsized, its space can be omitted. Further, by the space omission and by also specializing the standby disk 90 for the reaction of the flow-based analysis, many flow-based analysis mechanisms can be arranged, and therefore, the test efficiency of not only the biochemical test but also the flow-based analysis can be improved.

In addition, as described above, in the automatic analysis devices of the present invention, at least any of the reagent dispensing mechanisms is commonly used as the pretreatment-liquid dispensing mechanism, and therefore, the difference in the number of operations among the reagent dispensing mechanisms is decreased, so that the device can be simply configured without decreasing the processing ability. That is, when it is desired that the tests for the plurality of items are carried out by one device, the dedicated reagent dispensing mechanism is required for each test mechanism because the reagent dispensing timing is different among the tests due to the difference in the analysis principle, and therefore, this is a cause of the complicated device. Accordingly, by commonly using the reagent dispensing mechanism so that the item for which the dispensing is carried out by the reagent dispensing mechanism can be determined in accordance with the relative number of test requests for each test item, both of the simplification of the device and the efficiency of the treatment can be achieved.

More specifically, since the items of the flow-based analysis and the biochemical test which require the pretreatment have the relatively small number of test requests, the dispensing mechanism is shared among these items, and the dedicated reagent dispensing mechanism is used for the biochemical test having the relatively large number of test requests and which does not require the pretreatment, so that the reagent-dispensing timing is not overlapped among the tests for the plurality of items. In this manner, the tests for the plurality of items can be efficiently carried out as simplifying the device configuration. And, by commonly using the dispensing mechanism of the flow-based analysis reagent as the pretreatment-liquid dispensing mechanism, not only the pretreatment of the sample but also the reaction with flow-based analysis reagent can be carried out on the intermediate disk 20, and therefore, the device configuration can be further simplified.

Also, in the automatic analysis device 1b shown in FIGs. 7A and 7B, even when the reagent dispensing mechanisms 65a and 65b for the biochemical test are commonly used as the dispensing mechanism of the pretreatment liquid or the flow-based analysis reagent, by using each of them in the regular order such as the alternate order for dispensing the flow-based analysis reagent or others, the reagent-dispensing timing is not easily overlapped among the tests of the plurality of items. That is, the reagent dispensing mechanism on the side that is not used for the reagent dispensing for the biochemical test can be easily allocated to the dispensing of the flow-based analysis reagent or others. And, in this case, since the number of the reagent dispensing mechanisms is decreased, the device configuration can be further simplified as maintaining the processing ability for the plurality of items.

Further, even if only one reagent dispensing mechanism is used similarly to the automatic analysis device 1c shown in FIGs. 8A and 8B, when the reagent dispensing timing is overlapped among the tests for the plurality of items, the reagent dispensing is preferentially carried out for the biochemical test having the relatively large number of test requests, so that the decrease in the processing ability can be minimized. The similar thing applies also to the case that the reagent-dispensing timing is overlapped in the automatic analysis device 1b shown in FIGs. 7A and 7B. In this manner, the tests for the plurality of items can be efficiently treated as further simplifying the device configuration.

On the other hand, similarly to the automatic analysis device 1d shown in FIG. 9, by separately providing the biochemical-test reagent retaining area 70 into two areas, the dedicated reagent dispensing mechanisms 65a to 65d can be provided in respective areas without increasing the device size. And, by providing the four reagent dispensing mechanisms for dispensing the reagents on the reaction disk 60, the biochemical tests having the relatively large number of test requests can be separated into two ways of the first and second reagent dispensing mechanisms 65a and 65b and the third and fourth reagent dispensing mechanisms 65c and 65d, and can be more quickly treated. And, by separately providing the reaction disk 60 in each biochemical-test reagent retaining area 70 or others, the treatment can be further quickly carried out. In this manner, the tests for the plurality of items can be further efficiently carried out without complicating the device configuration.

Also, in the automatic analysis device of the present invention, similarly to another mode example explained below, the device may be simplified by providing a multiple-use mechanism being functioned as both of the dispensing mechanism and the container conveying mechanism.

### [Another Mode Example]

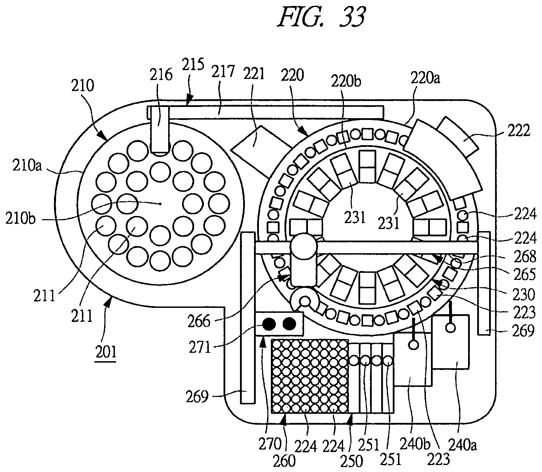

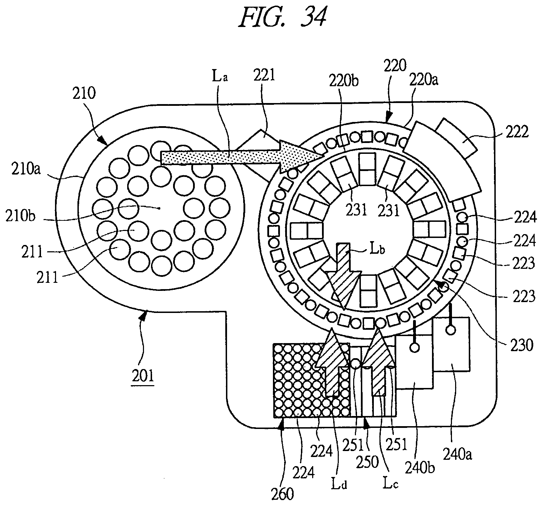

FIG. 33 is a schematic plan view showing an outline of an embodiment of the automatic analysis device of the present invention, in which the multiple-use mechanism is provided, and FIG. 34 is a view showing flows of the sample, the pretreatment liquid, the reagent, and the disposable container in the automatic analysis device of FIG. 33. Note that, in FIG. 34, the showing of each dispensing mechanism or others is intentionally omitted for convenience of understanding. Also, the showing of the controlling unit, the displaying unit, the inputting unit, and the memory unit is intentionally omitted in any drawing.

As shown in FIG. 33, an automatic analysis device 201 includes: a sample disk 210 as a disk; a common disk (disk for both of the reaction and the pretreatment) 220; and a biochemical-test reagent disk 230, and further includes flow-based analysis mechanisms 240a and 240b as test mechanisms for a plurality of items. Also, it includes: a pretreatment liquid and flow-based analysis reagent container storage unit (hereinafter, referred to as pretreatment-liquid-container/others storage unit) 250; a disposable-container storage unit 260; and a dispensing-nozzle standby unit 270, as a container storage unit or a standby unit for a mechanism.

And, as the dispensing mechanism, it includes a sample dispensing mechanism 215 between the sample disk 210 and the common disk 220. Similarly, it includes a multiple-use mechanism 265 being functioned as both of a pretreatment-liquid/reagent dispensing mechanism and a disposable-container conveying mechanism (container conveying mechanism) provided in a range from the biochemical-test reagent disk 230 to the pretreatment-liquid-container/others storage unit 250 and the disposable-container storage unit 260 via the common disk 220.

In the sample disk 210, each of sample containers 211 for retaining samples is arranged on an outer circumference 210a side and a center 210b side at a predetermined interval.

The common disk 220 is provided on a lateral side of the sample disk 210, and carries out both the reaction of the sample with the reagent and the pretreatment for the sample by the pretreatment liquid. In this manner, the device can be compact. Note that, when the "pretreatment" is described in the present invention, dilution of the sample is also included therein.

In the common disk 220, on the outer circumference 220a side, there are provided: a light-measuring mechanism (test mechanism) 221 for the biochemical test being functioned as one of the test mechanisms for the plurality of items; a rinsing mechanism 222; and an agitating mechanism for agitating the sample with the pretreatment liquid or the reagent although the showing is omitted. Although not shown as well, the light-measuring mechanism 221 includes: a light source for irradiating analysis light for analyzing the reaction liquid in the container; a detector for dispersing and detecting the analysis light transmitted through the reaction liquid; and others. Note that the light-measuring mechanism 221 may be used for the test for the item other than biochemistry.

Along a circumferential direction of the common disk 220, fixed containers 223 fixed on the common disk 220 and detachably-provided disposable containers (containers) 224 are alternately arranged. The fixed containers 223 are reused through the rinsing by the rinsing mechanism 222, and the disposable containers 224 are disposable.

A publicly-known container having high profile irregularity in response to colorimetric analysis can be used for the fixed containers 223, and a publicly-known container can be also used for the disposable containers 224. The disposable container 224 is used when the sample is dispensed in the pretreatment or the reaction with the flow-based analysis reagent. However, when the pretreatment is the sample dilution, the sample may be dispensed into the fixed container 223 from the beginning because there is no risk of contamination between the samples.

In the drawing example, the fixed containers 223 and the disposable containers 224 are alternately arranged from a viewpoint of easy control. However, for example, an orderly arrangement such that the disposable container 224 is arranged for every two fixed containers may be used, and the number of the arranged containers can be also arbitrarily increased or decreased as required. Note that each of the disposable containers 224 is shown in circle for easily distinguishing from the fixed container 223. However, the disposable container 224 may be also rectangular.

On the inner circumference 220b side of the common disk 220, a biochemical-test reagent disk 230 is provided. Along a circumference direction in the biochemical-test reagent disk 230, biochemical-test reagent cassettes 231 each of which retains a first reagent and a second reagent for the biochemical test in one container are arranged. In this manner, it is not required to separately control the first reagent and the second reagent. However, the first reagent and the second reagent may be separately retained by a container such as a test tube. Also, the biochemical-test reagent disk 230 may be provided at a different position in the automatic analysis device 201. Further, the biochemical-test reagent disk 230 and the biochemical-test reagent cassettes 231 may retain a reagent for a test for a different item.

The flow-based analysis mechanisms 240a and 240b, the pretreatment-liquid-container/others storage unit 250, and the disposable-container storage unit 260 are provided on a front side of the device further than the common disk 220.

The flow-based analysis mechanisms 240a and 240b can arbitrarily select and carry out a test which is publicly known as the flow-based analysis such as the immunoserological test, the blood coagulation test, and the electrolyte test, in accordance with a test-request item. The number of the flow-based analysis mechanisms may be arbitrarily increased, decreased, or eliminated in accordance with the test-request item. In this manner, the device can be further compact.

It is needless to say that, in a container 251 stored in a pretreatment-liquid-container/others storage unit 250, each of the pretreatment liquid in carrying out the pretreatment and a corresponding flow-based analysis reagent in carrying out the flow-based analysis is retained.

The disposable containers 224 stored in the disposable-container storage unit 260 can be arbitrarily exchanged with the disposable containers 224 in the intermediate disk 20 by the multiple-use mechanism 265.

In the dispensing-nozzle standby unit 270, when the multiple-use mechanism 265 is used as the disposable-container conveying mechanism, a dispensing nozzle 271 is detached from the multiple-use mechanism 265 to be temporarily placed therein, that is, to be under a standby state. Note that, in the dispensing-nozzle standby unit 270, two dispensing nozzles 271 can be under the standby state in the drawing example. However, the number of the dispensing nozzles 271 which can be under the standby state may be arbitrarily changed in accordance with the test-request item.

As described above, in the automatic analysis device 201, as shown by arrows Lₐ to L_{d} shown in FIG. 34, the flows of dispensing of the sample, the reagent, and the pretreatment liquid from each container of the sample disk 210, the biochemical-test reagent disk 230, and the pretreatment-liquid-container/others storage unit 250 to the fixed container 223 or the disposable container 224 of the common disk 220 are formed. Also, the conveying flow of the disposable container 224 from the disposable-container storage unit 260 to the common disk 220 is formed. Note that these flows are substantially the same as the flows in the automatic analysis device If shown in FIG. 12.

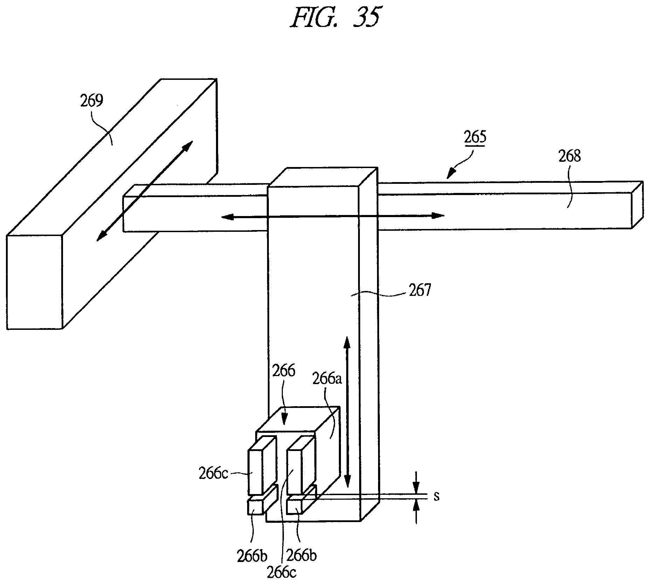

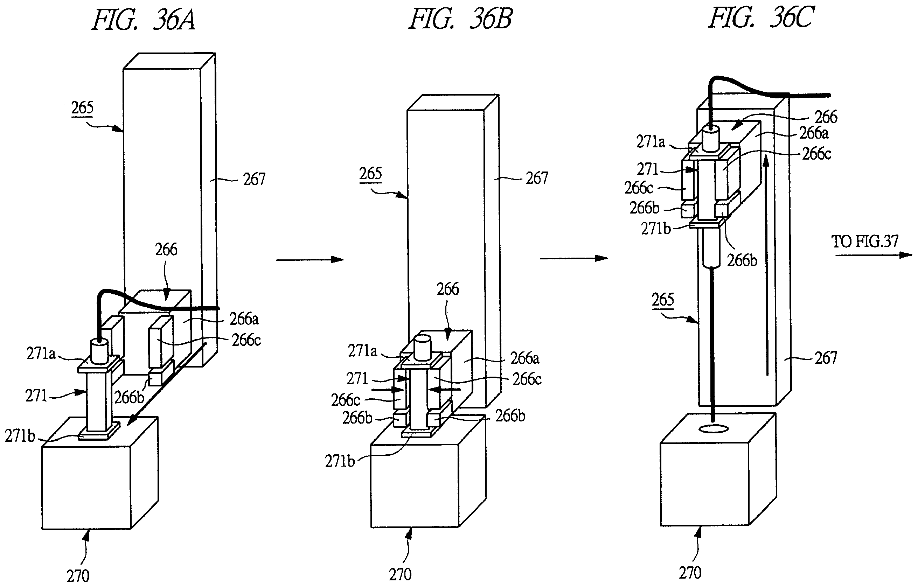

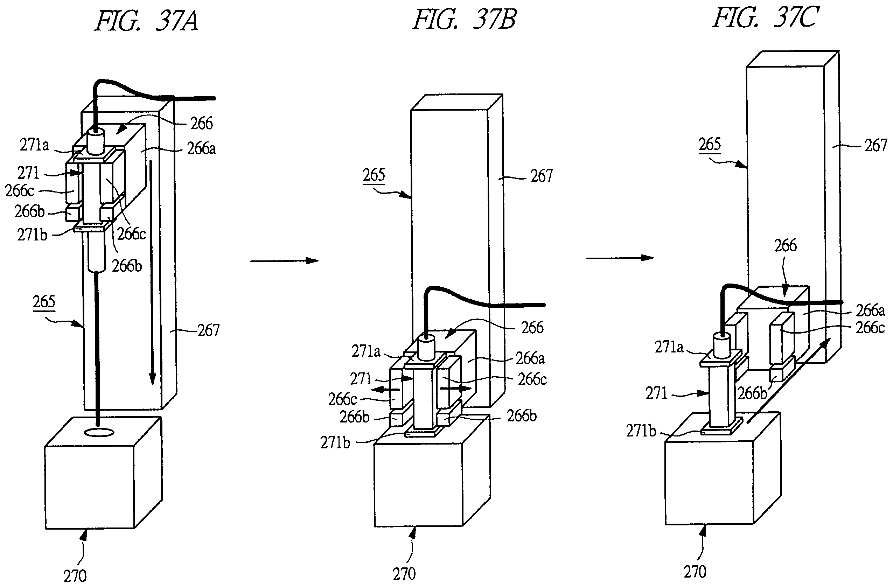

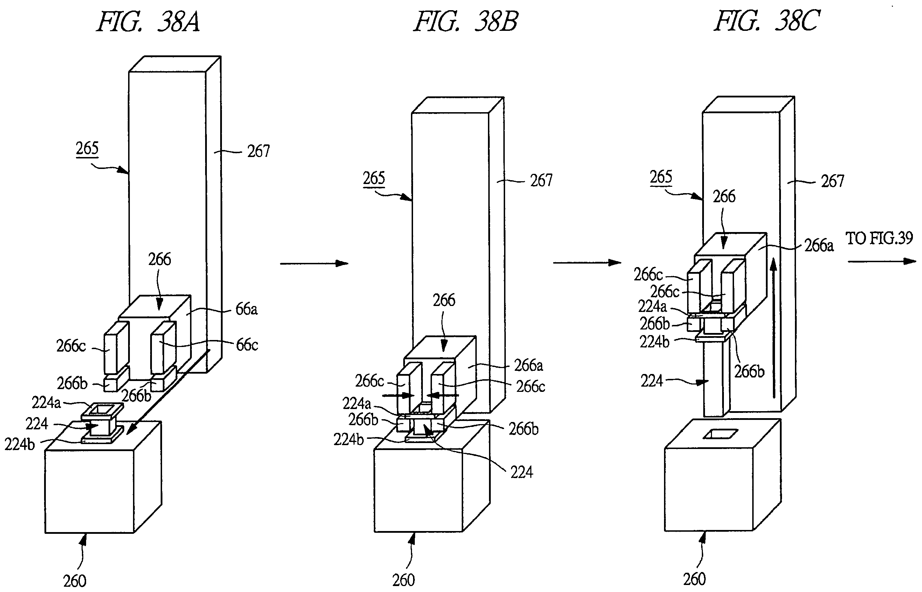

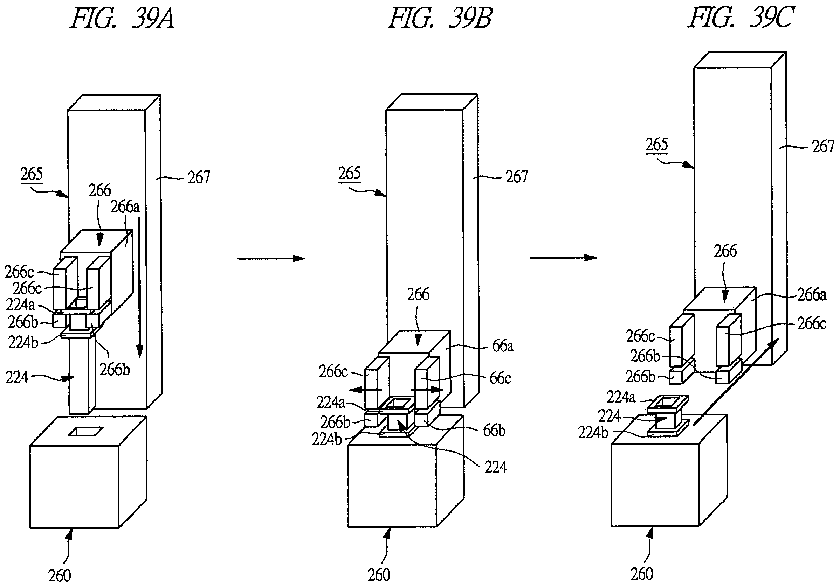

Subsequently, a configuration of each dispensing mechanism is explained. FIG. 35 is a principal-part perspective view showing the multiple-use mechanism. FIGs. 36A to 36C and 37A to 37C are explanatory views each explaining a flow of an operation of the multiple-use mechanism used as a pretreatment-liquid/reagent dispensing mechanism. FIGs. 38A to 38C and 39A to 39C are explanatory views each explaining a flow of an operation of the multiple-use mechanism used as a disposable-container conveying mechanism. Note that, in FIGs. 36A to 39C, the showing of the width-direction rail and the depth-direction rail is intentionally omitted for convenience of understanding.

As shown in FIG. 33, the sample dispensing mechanism 215 includes: a sample dispensing arm 216; and a guide rail 217 provided along a width direction of the device. The sample dispensing arm 216 is attached to this guide rail 217, so that its movement in the width direction is guided. Note that the sample dispensing mechanism 215 may be other publicly-known mechanism with an XY-rail type, multiple-joint type, or others.

As shown in FIG. 35, the multiple-use mechanism 265 is a mechanism with a so-called XYZ rail type including: a gripping arm 266; a height-direction rail (guide member) 267 provided along a height direction of the device; a width-direction rail 268 provided along the width direction thereof; and a depth-direction rail 269 provided along a depth direction thereof. Note that, as shown in FIG. 33, the depth-direction rail 269 is practically paired so as to interpose the width-direction rail 268. Also, the depth-direction rail 269 on the sample disk 210 side is formed longer than the depth-direction rail 269 on the flow-based analysis mechanism 240a side because it is required that the gripping arm 266 reach the disposable-container storage unit 260 on the device front side.

The gripping arm 266 is attached to the height-direction rail 267, and slides on the height-direction rail 267. The height-direction rail 267 is attached to the width-direction rail 268 on an upper end side itself, and slides on the width-direction rail 268. And, the width-direction rail 268 is attached to the depth-direction rail 269, and slides on the depth-direction rail 269. That is, the movement of the gripping arm 266 is directly guided by the height-direction rail 267 in the height direction of the device and is guided by the width-direction rail 268 or the depth-direction rail 269 via the height-direction rail 267 in the width direction or the depth direction.

The gripping arm 266 includes: a gripping arm main body 266a abutting the height-direction rail 267; and a pair of first gripping parts 266b and a pair of second gripping parts 266c provided to protrude from width-direction both ends of the gripping arm main body 266a toward the depth-direction front side.

Both of the first and second gripping parts 266b and 266c are provided along an extending direction of the height-direction rail 267 with a state that a space "s" is formed between both of them. And, the first gripping parts 266b are formed relatively short in the extending direction of the height-direction rail 267, and the second gripping parts 266c are formed longer than the first gripping parts 266b in this direction.

In a case of usage as the pretreatment-liquid/reagent dispensing mechanism, first, as shown in FIG. 36A, the gripping arm 266 of the multiple-use mechanism 265 approaches the dispensing nozzle 271, which is under the standby state in the dispensing-nozzle standby unit 270, from the depth direction together with the height-direction rail 267.

After the approach, as shown in FIG. 36B, the first and second gripping parts 266b and 266c of the gripping arm 266 narrow in the width direction to grip the dispensing nozzle 271 from both sides.

After the gripping, as shown in FIG. 36C, the gripping arm 266 is moved upward along the height-direction rail 267 until the dispensing nozzle 271 is completely taken out from the dispensing-nozzle standby unit 270.

Here, in the dispensing nozzle 271, a pair of flange-shaped engaging parts 271a and 271b is formed on height-direction both ends of the part gripped by the first and second gripping parts 266b and 266c to abut the first and second gripping parts 266b and 266c when the nozzle is gripped by the gripping arm 266, so that the nozzle is not accidentally easily detached from the gripping arm 266. Note that the dispensing nozzle 271 is connected with a syringe mechanism not shown, and a dispensed reagent or pretreatment liquid is supplied by this syringe mechanism.

Normally, since the number of biochemical tests which require the pretreatment or tests of flow-based analysis to be the items in which the disposable containers 224 are used is small, the multiple-use mechanism 265 is functioned as the reagent dispensing mechanism with the dispensing nozzle 271 attached thereto. However, in the items in which the disposable containers 224 are used, it is required to detach the dispensing nozzle 271 in order to convey them.

When this dispensing nozzle 271 is to be detached, first, as shown in FIG. 37A, the gripping arm 266 is moved onto the dispensing-nozzle standby unit 270, and then, is moved downward along the height-direction rail 267.

After the movement, as shown in FIG. 37B, the dispensing nozzle 271 is inserted into the dispensing-nozzle standby unit 270, and the first and second gripping parts 266b and 266c widen in the width direction to be away from the dispensing nozzle 271.

Then, as shown in FIG. 37C, the gripping arm 266 is moved away from the dispensing-nozzle standby unit 270 in the depth direction together with the height-direction rail 267.

After the multiple-use mechanism 265 detaches the dispensing nozzle 271 therefrom, and when it is functioned as the disposable-container conveying mechanism, almost the same operations as those shown in FIGs. 36A to 36C are carried out. That is, first, as shown in FIG. 38A, the gripping arm 266 approaches the disposable container 224, which is stored in the disposable-container storage unit 260, from the depth direction together with the height-direction rail 267.

After the approach, as shown in FIG. 38B, the first gripping parts 266b narrow in the width direction, so that the disposable container 224 is gripped from both sides by only the first gripping parts 266b. Note that, at this time, the second gripping parts 266c also narrow in the width direction.

After the gripping, as shown in FIG. 38C, the gripping arm 266 is moved upward along the height-direction rail 267 until the disposable container 224 is completely taken out from the disposable-container storage unit 260.

Here, in the disposable container 224, similarly to the dispensing nozzle 271, a pair of flange-shaped engaging parts 224a and 224b are formed on height-direction both ends of the part gripped by the first gripping parts 266b to abut the first gripping parts 266b, so that the container is not accidentally easily detached from the gripping arm 266. Note that, at this time, the engaging part 224a on an upper side of the disposable container 224 is inserted in the space "s" (see FIG. 35) between the first gripping parts 266b and the second gripping parts 266c, and therefore, it is engaged also with the second gripping parts 266c, so that the container is further not accidentally easily detached from the gripping arm 266.

When the disposable container 24 after being used is disposed into the disposable-container storage unit 260, almost the same operations as those shown in FIGs. 37A to 37C are carried out. That is, as shown in FIG. 39A, first, the gripping arm 266 is moved onto the disposable-container storage unit 260, and then, is moved downward along the height-direction rail 267.

After the movement, as shown in FIG. 39B, the disposable container 224 is inserted into the disposable-container storage unit 260, and then, the first gripping parts 266b widen in the width direction to be away from the disposable container 224. Note that, at this time, the second gripping parts 266c also widen in the width direction.

Then, as shown in FIG. 39C, the gripping arm 266 is moved away from the disposable-container storage unit 260 in the depth direction together with the height-direction rail 267.

Note that, in the drawing example, the example of the detachment of the disposable container 224 from the disposable-container storage unit 260 has been explained. However, detachment from the common disk 220 can be also similarly carried out.

In this manner, since the relatively-short first gripping parts 266b and the second gripping parts 266c longer than this are provided in the gripping arm 266, the multiple-use mechanism 265 can be functioned as the dispensing mechanism by gripping the dispensing nozzle 271, and can be functioned also as the disposable-container conveying mechanism by gripping the disposable container 224 instead of detaching the dispensing nozzle 271.

That is, the dispensing nozzle 271 is conveyed with the reagent inputted therein in the dispensing, or is inserted into the container, and therefore, it is not easy to allow a positional shift, and it is required to ensure the gripping part to be long. On the other hand, in the disposable container 224, it is only required to insert it into the disposable-container storage unit 260 or the common disk 220, and therefore, it is easy to allow the positional shift. Also, since the container is an optical product, if the container is gripped over a wide area, it is adversely damaged easily, and therefore, there is a risk that the analysis is affected thereby. Therefore, it is preferred to shorten the gripping part of the disposable container 224.

Accordingly, by providing the first gripping parts 266b and the second gripping parts 266c in the gripping arm 266 and gripping the dispensing nozzle 271 by both of the gripping parts 266b and 266c and the disposable container 224 only by the first gripping parts 266b, the mechanism can be functioned as both of the dispensing mechanism and the disposable-container conveying mechanism. Note that, for the first and second gripping parts 266b and 266c, their functions may be reinforced by a publicly-known member such that they are biased by a spring member.

In the drawing example, the multiple-use mechanism 265 is used in the automatic analysis device 201 including the plurality of test mechanisms and the common disk 220 capable of carrying out both of the reaction and the pretreatment. However, the usage is not limited to this, and the multiple-use mechanism may be used in an automatic analysis device in which the reaction disk and the pretreatment disk are separately provided or in an automatic analysis device including only one test mechanism. Alternatively, the multiple-use mechanism 265 may be used as the dispensing device to be replaced with the dispensing mechanism already installed inside the automatic analysis device. Further, the multiple-use mechanism 265 may be applied to not only the dispensing mechanism for the reagent or the pretreatment but also the sample dispensing mechanism.

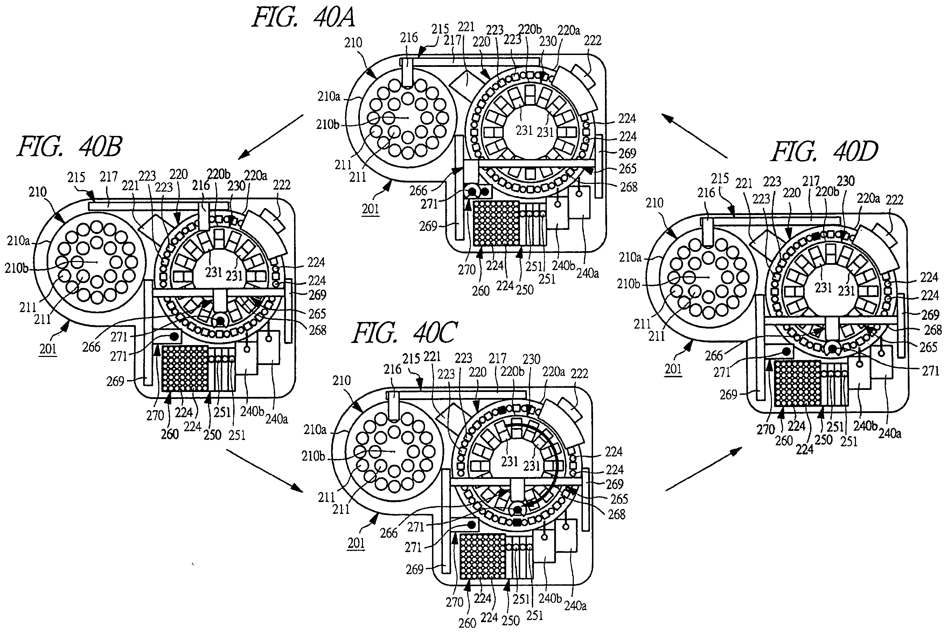

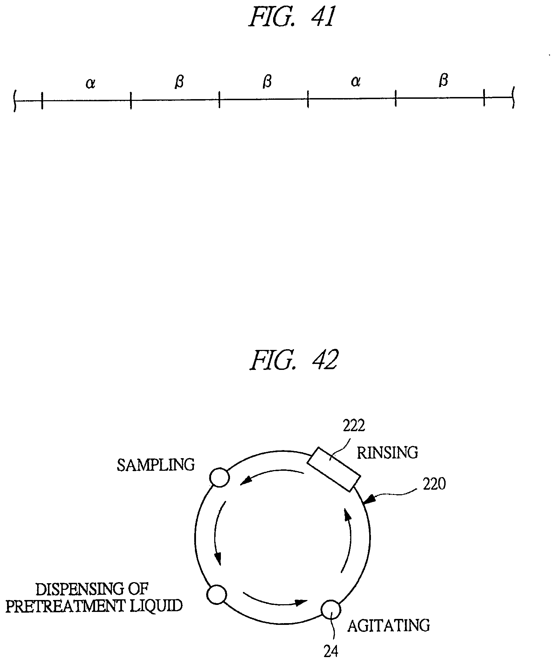

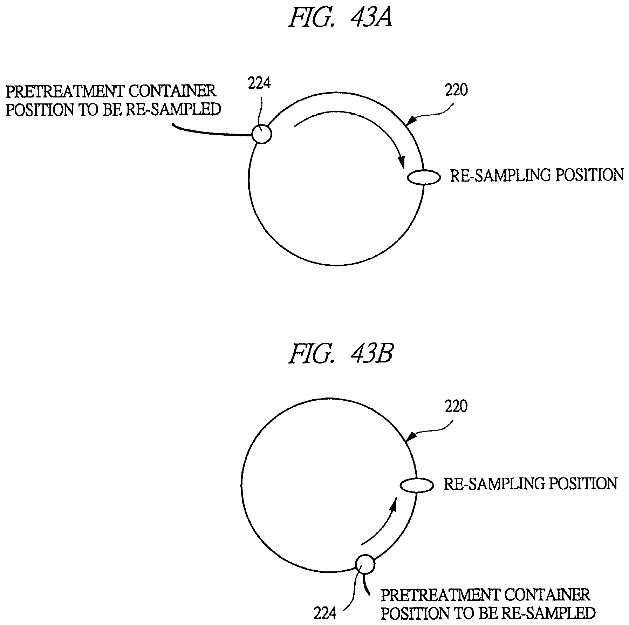

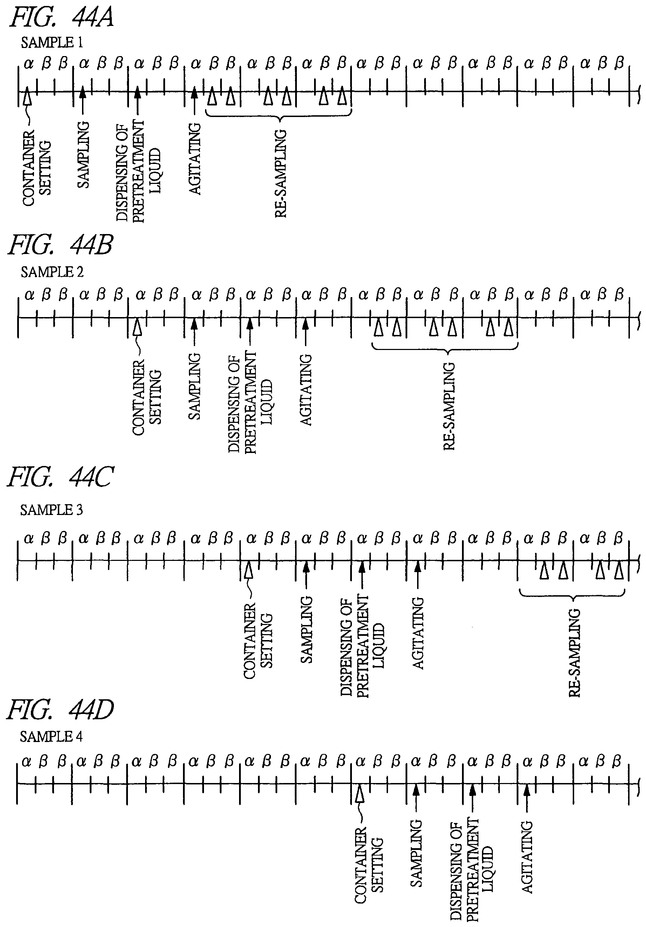

Subsequently, a flow of an operation of the automatic analysis device 201 and a rotating operation of the common disk 220 in the pretreatment are explained. FIGs. 40A to 40D are explanatory views each explaining the flow of the operation in the automatic analysis device of FIG. 33. FIG. 41 is an explanatory diagram explaining a basic cycle of the common disk, FIG. 42 is an explanatory diagram explaining the rotating operation of the common disk in an α cycle, and FIGs. 43A and 43B are explanatory diagrams each explaining the rotating operation of the common disk in a β cycle. FIGs. 44A to 44D are explanatory diagrams each explaining an example of the operation in a case of the shortest cycle of the basic cycle of FIG. 41, and FIGs. 45 to 47 are diagrams each showing an example of the rotating operation of the common disk in a case that 20 containers are arranged. Note that, in FIGs. 42 to 43B and 45 to 47, the arrangement of the common disk is arbitrarily omitted or changed intentionally for convenience of understanding.

As shown in FIG. 40A, when the biochemical test which does not require the pretreatment is started, in the automatic analysis device 201, the sample dispensing arm 216 of the sample dispensing mechanism 215 is moved onto the sample container 211 of the sample disk 210 by the guide rail 217 to suck the sample in the sample container 211. Also, the gripping arm 266 of the multiple-use mechanism 265 is moved onto the dispensing-nozzle standby unit 270 by the width-direction rail 268, the depth-direction rail 269, and others, to grip the first-reagent-dispensing nozzle 271 which is under the standby state.

After the sample suction and the nozzle gripping, as shown in FIG. 40B, the sample dispensing arm 216 is moved onto the fixed container 223 of the common disk 220 to discharge the sample into this fixed container 223. Also, the gripping arm 266 is moved onto the biochemical-test reagent cassette 231 of the biochemical-test reagent disk 230 to suck the first reagent in the biochemical-test reagent cassette 231.

After the sample discharge and the reagent suction, as shown in FIG. 40C, the common disk 220 rotates clockwise (see an arrow in the drawing) to move the sample (at blackly-filled positions in the drawing in which both of the positions before and after the movement are filled with a black color for convenience of understanding).

After the sample movement, as shown in FIG. 40D, the gripping arm 266 is moved onto the fixed container 223 to discharge the first reagent into the fixed container 223. Note that, in order to reduce a moving distance of the gripping arm, the gripping arm 266 suctions the first reagent from the biochemical-test reagent cassette 231, which is opposed to the fixed container 223 so as to interpose an edge of the inner circumference 220b of the common disk 220 therebetween, the fixed container 223 into which the first reagent is discharged.

After the first-reagent suction, when the second reagent is to be dispensed, the gripping arm 266 is moved to the dispensing-nozzle standby unit 270 again as shown in FIG. 40A after the dispensing nozzle 271 is rinsed as required by a dedicated rinsing mechanism not shown, to return the first-reagent dispensing nozzle 271 to the dispensing-nozzle standby unit 270. And, the arm grips the second-reagent dispensing nozzle 271 which is adjacently arranged thereto, and almost the same operations as those shown in FIGs. 40A to 40D are carried out. If there is no risk of the carry over between the reagents, the second reagent may be dispensed as it is without changing the dispensing nozzle 271. Note that the dispensing of the second reagent is normally carried out after about five minutes from the discharge of the first reagent.

As described above, the reaction liquid obtained after the reaction of the sample with the first reagent and with the second reagent as required is moved to the light-measuring mechanism 221 by the rotation of the common disk 220, and is analyzed. After the analysis is finished, the fixed container 223 is rinsed by the rinsing mechanism 222.

In the biochemical test which requires the pretreatment, in FIG. 40B, the sample is discharged into not the fixed container 223 but the disposable container 224. Also, between the operations shown in FIGs. 40A and 40B, the pretreatment liquid is dispensed from the pretreatment-liquid-container/others storage unit 250 into the disposable container 224 by the multiple-use mechanism 265. And, after the sample pretreatment, the sample is re-dispensed from the disposable container 224 into the fixed container 223, and the unnecessary disposable container 224 is conveyed to the disposable-container storage unit 260 by the gripping arm 266 of the multiple-use mechanism 265, and then, is disposed thereto. Note that, if the pretreatment is the sample dilution, the sample may be dispensed into the fixed container 223 from the beginning since there is no risk of contamination between the samples.

The flow-based analysis such as the immunoserological test is operated similarly to the biochemical test which requires the pretreatment except for dispensing the flow-based analysis reagent instead of the pretreatment liquid. And, after the reaction of the sample with the flow-based reagent, the reaction liquid is suctioned by the flow-based analysis mechanisms 240a and 240b.

As shown in FIG. 41, the common disk 220 is operated by a basic cycle obtained by combining an α cycle in which the pretreatment operation is carried out and a β cycle in which the re-sampling (the pretreated-sample dispensing) operation to the analysis unit (test mechanism) is carried out. Each of the α cycle and the β cycle is independently controlled. However, their cycle time periods are set to be the same, so that the operation timing of the pretreatment and the operation timing to the analysis unit are commonly used. Note that, in the example of FIG. 41, two β cycles are inserted after the α cycle. However, the number of the β cycles after the α cycle may be arbitrarily changed in accordance with the test item, the number of samples, or others. Also, in the biochemical test which does not require the pretreatment, the α cycle may be allocated to the operation of the β cycle.

As shown in FIG. 42, in the α cycle, the sampling (sample dispensing), the pretreatment-liquid dispensing, the agitating, and the rinsing are carried out during one cycle. The common disk 220 rotates orderly in one direction at the number of steps having a common factor with a number obtained by adding one to the number of arranged containers such as "N" disposable containers.

The β cycle is operated at a stage when the series of operations of the pretreatment up to the agitating in the α cycle is finished and the sample to be re-sampled is prepared. As shown in FIGs. 43A and 43B, in the β cycle, no matter where the container to be re-sampled next is at any position on the common disk 220, the container is moved to the re-sampling position. A distance of the movement in this case is arbitrary. However, for the common disk 220, both of the clockwise rotation shown in FIG. 43A and the counterclockwise rotation shown in FIG. 43B can be selected, so that the distance and the time of the movement can be shortened.

In the pretreatment, when it is not required to leave the sample or heat it for a certain time period, the common disk is operated for the sample in a procedure as shown in, for example, FIGs. 44A to 44D.

First, as shown in FIG. 44A, in an initial α cycle, the disposable container for sampling an initial sample (sample 1) is set, and the sample 1 is sampled in a next α cycle.

In a third α cycle, the pretreatment liquid is dispensed into the sample 1, and besides, the disposable container for sampling a sample 2 following the sample 1 is set as shown in FIG. 44B. In the second α cycle, the disposable container is not set because the fixed container is at the container setting position.

In a fourth α cycle, the sample 1 is agitated, and besides, the sample 2 is sampled. Also, the sample 1 is re-sampled in the two β cycles following this α cycle. And, in the drawing example, since there are six biochemical test items, the re-sampling is carried out also in the two β cycles of next and further next basic cycles.

In a fifth α cycle, the pretreatment liquid is dispensed into the sample 2, and besides, the disposable container for sampling a sample 3 following the sample 2 is set as shown in FIG. 44C. In a sixth α cycle, the sample 2 is agitated, and besides, the sample 3 is sampled. In β cycles following this α cycle, the re-sampling of the sample 1 is carried out, and therefore, the re-sampling of the sample 2 is not carried out, and is carried out in β cycles of a next or later basic cycle.

In a seventh α cycle, the pretreatment liquid is dispensed into the sample 3, and besides, the disposable container for sampling a sample 4 following the sample 3 is set as shown in FIG. 44D.

In this manner, the sampling, the pretreatment-liquid dispensing, the agitating, and the re-sampling are sequentially repeated. Note that FIGs. 44A to 44D show the example in the case of the shortest cycle, and the empty cycle may be arbitrarily provided in order to avoid the overlap of the dispensing timing of the multiple-use mechanism, the carry over, or others.

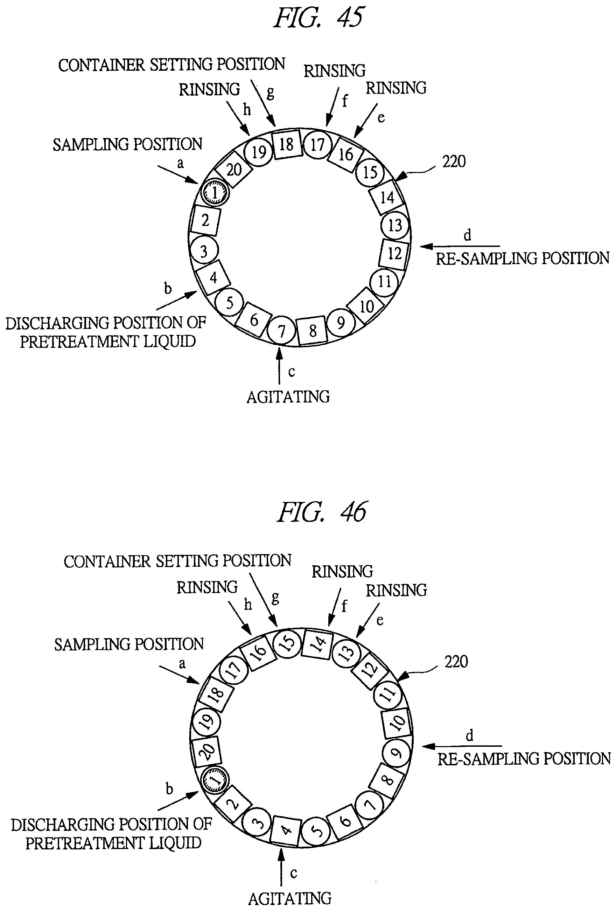

For example, when total 20 fixed containers and disposable containers are alternately arranged on the common disk 220, the common disk 220 is rotationally operated as shown in FIGs. 45 to 47. Note that, in FIGs. 45 to 47, a circular container denoted by an odd number represents the disposable container, and a rectangular container denoted by an even number represents the fixed container.

First, as shown in FIG. 45, at the timing of the α cycle, the common disk 220 is rotated counterclockwise by three-container positions, so that the disposable container 224 numbered as "1" set at a position of "g" is sampled at a position of "a".

Next, as shown in FIG. 46, the common disk 220 is further rotated counterclockwise by three-container positions, so that the pretreatment liquid is dispensed at a position of "b".

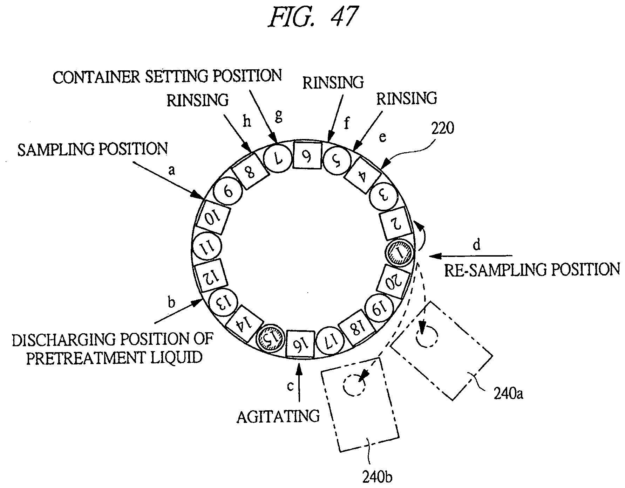

And, the common disk 220 is further rotated counterclockwise by three-container positions, so that the pretreatment liquid is agitated at a position of "c". Then, as shown in FIG. 47, the common disk 220 is rotated to a position of "d" at the timing of the β cycle, so that, at this position, the re-sampling from the disposable container numbered as "1" to an adjacent fixed container numbered as "2" is carried out. At this time, in the flow-based analysis, the flow-based analysis reagent is dispensed at the position of "b", and the re-sampling is carried out to the flow-based analysis mechanisms 240a and 240b at the position of "d". Note that FIG. 47 shows a state that the sample has been already dispensed also into the disposable container numbered as "15".

After the re-sampling is finished, at the timing of the next α cycle again, the sample suction, the rinsing-liquid discharge, and the rinsing are sequentially carried out to the fixed container at rinsing-mechanism positions of "e", "f", and "h", and the disposable container is disposed.

In this manner, in the multiple-use mechanism 265 in the automatic analysis device 201, by providing the dispensing nozzle 271 detachable, the mechanism has both of the function as the dispensing mechanism for the pretreatment liquid or the reagent in the state of attaching the dispensing nozzle 271 and the function as the disposable-container conveying mechanism in the state of detaching the dispensing nozzle 271. In this manner, the disposable-container conveying mechanism which is only used in the biochemical test which requires the pretreatment and the flow-based analysis test item having the relatively small number of test requests can be omitted, and therefore, the device can be compact (simplified).

Also as the dispensing mechanism for the pretreatment liquid or the reagent, the dispensing of the first and second reagents for the biochemical test, the dispensing of the flow-based reagent, and the dispensing of the pretreatment liquid are carried out only by the multiple-use mechanism 265, and therefore, the device can be further compact compared with the case that the dispensing mechanism for the plurality of reagents or pretreatment liquid is provided. However, in addition to the multiple-use mechanism 265, the dispensing mechanism for the reagent or the pretreatment liquid may be provided in combination. According to this, the treatment efficiency can be improved as the compact of the device.

Further, since the dispensing nozzle 271 is provided detachably to the multiple-use mechanism 265, by preparing the plurality of dispensing nozzles 271 and making them stand by in the dispensing-nozzle standby unit 270, the dispensing nozzles 271 can be selected in accordance with the type of the dispensed reagent or pretreatment liquid. In this manner, occurrence of the contamination and the carry over can be easily avoided. Also, by preparing a plurality of dispensing nozzles or syringe mechanisms having different volumes, the dispensing nozzles or the syringe mechanisms connected thereto can be selected in accordance with a dispensing amount of the reagent or the pretreatment liquid. In this manner, the reagent or the pretreatment liquid can be more quickly dispensed. Note that it is needless to say that these facts are the same also in a case that the multiple-use mechanism 265 is applied to the sample dispensing mechanism.

### INDUSTRIAL APPLICABILITY

The present invention can be used for an automatic analysis device for automatically analyzing a component such as blood.

### SYMBOL EXPLANATION

1a automatic analysis device
1b automatic analysis device
1c automatic analysis device
1d automatic analysis device
1e automatic analysis device
1f automatic analysis device
2 automatic analysis device
10 sample disk
10a outer circumference
10b center
11 sample container
15 sample dispensing mechanism
16 sample dispensing arm
17 width-direction rail
18 depth-direction rail
20 intermediate disk (intermediate unit)
21 disposable container (intermediate container)
23 rinsing mechanism
30a flow-based analysis mechanism (sub analysis unit, test mechanism)
30b flow-based analysis mechanism (sub analysis unit, test mechanism)
30c flow-based analysis mechanism (sub analysis unit, test mechanism)
30d flow-based analysis mechanism (sub analysis unit, test mechanism)
40 pretreatment-liquid/flow-based analysis reagent container storage unit (pretreatment-liquid-container/others storage unit)
41 container
45 pretreatment-liquid/flow-based analysis reagent dispensing mechanism (pretreatment-liquid/others dispensing mechanism)
46 pretreatment-liquid/others dispensing arm
47 depth-direction rail
48 width-direction rail
50 disposable-container storage unit
55 disposable-container conveying mechanism
56 container gripping arm
57 depth-direction rail
58 width-direction rail
60 reaction disk (main analysis unit)
61 reaction disk
62 light-measuring mechanism
63 rinsing mechanism
65a first reagent dispensing mechanism
65b second reagent dispensing mechanism
65c third reagent dispensing mechanism
65d fourth reagent dispensing mechanism
66a first reagent dispensing arm
66b second reagent dispensing arm
66c third reagent dispensing arm
66d fourth reagent dispensing arm
67 depth-direction rail
68a width-direction rail
68b width-direction rail
68c width-direction rail
68d width-direction rail
69 depth-direction rail
70 biochemical-test reagent retaining area (reagent retaining area)
71 reagent cassette (sample container)
72a first reagent retaining unit
72b second reagent retaining unit
72c third reagent retaining unit
72d fourth reagent retaining unit
75 dispensing mechanism
76a first joint
76b second joint
76c joint part
76d base end part
80 common disk (intermediate unit and main analysis unit)
80a outer circumference
80b inner circumference
90 standby disk
100 sample rack (rack)
101 rack injecting unit
102 rack advancing mechanism
103 rack returning mechanism
104 rack storing mechanism
105 sample dispensing arm (sample dispensing mechanism)
L₁ sample flow
L₂ sample flow
L₃ pretreatment-liquid/others flow
L₂₁ sample flow to reaction disk
L₂₂ sample flow to standby disk
L₂₂₁ sample flow to flow-based analysis mechanism
L₂₂₂ sample flow to flow-based analysis mechanism
L₄ disposable-container flow
L₅ reagent flow
201 automatic analysis device
210 sample disk
210a outer circumference
210b center
211 sample container
215 sample dispensing mechanism
216 sample dispensing arm
217 guide rail
220 common disk (reaction/pretreatment multiple-use disk)
220a outer circumference
220b inner circumference
221 light-measuring mechanism (test mechanism)
222 rinsing mechanism
223 fixed container
224 disposable container (container)
224a engaging part
224b engaging part
230 biochemical-test reagent disk
231 biochemical-test reagent cassette
240a flow-based analysis mechanism
240b flow-based analysis mechanism
250 pretreatment-liquid/flow-based analysis reagent container storage unit (pretreatment-liquid-container/others storage unit)
251 container
260 disposable-container storage unit
265 multiple-use mechanism
266 gripping arm
266a gripping arm main body
266b first gripping parts
266c second gripping parts
267 height-direction rail (guide member)
268 width-direction rail
269 depth-direction rail
270 dispensing-nozzle standby unit
271a engaging part
271b engaging part
Lₐ sample flow
L_{b} reagent flow
L_{c} pretreatment-liquid/others flow
L_{d} disposable-container flow
s space

## Claims

1. An automatic analysis device (1b, 1c) comprising:
an intermediate disk (20) on which an intermediate container (21) for carrying out a pretreatment by a pretreatment liquid for a sample dispensed from a sample container (11) or a reaction of a reagent with the sample is arranged;
a plurality of test mechanisms (30a-c) for a plurality of items for the sample dispensed from the sample container (11) or the intermediate container (21);
a reaction disk (60) which is provided to any of the plurality of test mechanisms (30a-c) and on which a reaction vessel (61) for carrying out a reaction of the reagent with the sample is arranged;
a reagent dispensing mechanism (65a, 65b) which is adapted to dispense the reagent into the intermediate container (21) and the reaction vessel (61); and
a controlling unit for controlling the entire automatic analysis device (1b, 1c),
**characterised in that** the controlling unit is configured to control the automatic analysis device (1b, 1c) such that the reagent dispensing mechanism (65a, 65b) is used as a pretreatment-liquid dispensing mechanism for dispensing the pretreatment liquid into the intermediate container (21).

2. The automatic analysis device (1b, 1c) according to claim 1, wherein the controlling unit is configured to control the automatic analysis device (1b, 1c) such that the reagent dispensing mechanism (65a, 65b) is used by the intermediate disk (20) and the reaction disk (60).

3. The automatic analysis device (1b, 1c) according to claim 2, wherein a reagent container (71) which retains the reagent to be dispensed into the reaction vessel (61) and a container which retains the pretreatment liquid and the reagent to be dispensed into the intermediate container (21) are arranged in a common reagent retaining area (70).

4. The automatic analysis device (1b, 1c) according to claim 1, wherein a reagent retaining area (70) in which a reagent container (71) for retaining the reagent to be dispensed into the reaction vessel (61) is arranged is separated into two areas, and each reagent retaining area (70) includes a dedicated reagent dispensing mechanism (65a, 65c).

5. The automatic analysis device (1b, 1c) according to any one of claims 1 to 4, wherein, when a plurality of the reagent dispensing mechanisms (65a, 65b) are provided, the controlling unit is configured to control the automatic analysis device (1b, 1c) such that any one of the reagent dispensing mechanisms (65a, 65b) is used for dispensing of the pretreatment liquid and dispensing of the reagent for a test for a plurality of items each having a relatively small number of test requests.

6. The automatic analysis device (1b, 1c) according to claim 1, 2, or 4, wherein the controlling unit is configured to control the automatic analysis device (1b, 1c) such that the reagent dispensing mechanism (65a, 65b) is used for dispensing of the pretreatment liquid and dispensing of the reagent for the tests for the plurality of items.

7. The automatic analysis device (1b, 1c) according to claim 1, 2, or 6, wherein, when a timing of dispensing the reagent by the reagent dispensing mechanism (65a, 65b) is overlapped among the tests for the plurality of items, the controlling unit is configured to control the automatic analysis device (1b, 1c) such that a priority is put on the dispensing of the reagent for a test having a relatively large number of test requests.

8. The automatic analysis device (1b, 1c) according to any one of claims 1 to 7, wherein the automatic analysis device (1b, 1c) includes:
a rack (100) on which the sample container (11) is mounted and which conveys the sample container (11) to a position between the intermediate disk (20) and the reaction disk (60); and
a sample dispensing mechanism (105) which approaches the rack (100) at this position to dispense the sample.

## Patentansprüche

1. Automatische Analysevorrichtung (1b, 1c) mit
einem Zwischenteller (20) auf dem ein Zwischenbehälter (21) angeordnet ist, um eine Vorbehandlung durch eine Vorbehandlungsflüssigkeit für eine aus einem Probenbehälter (11) abgegebene Probe oder eine Reaktion eines Reagens mit der Probe durchzuführen,
mehreren Testmechanismen (30a-c) für mehrere Einheiten für die Probe, die aus dem Probenbehälter (11) oder dem Zwischenbehälter (21) ausgegeben wurden,
einem Reaktionsteller (60), der für einen der mehreren Testmechanismen (30a-c) vorgesehen ist, und auf dem ein Reaktionsgefäß (61) zum Durchführen einer Reaktion des Reagens mit der Probe angeordnet ist,
einem Reagens-Abgabemechanismus (65a, 65b), der dazu ausgelegt ist, das Reagens in den Zwischenbehälter (21) und das Reaktionsgefäß (61) abzugeben, und
einer Steuereinheit zum Steuern der gesamten automatischen Analysevorrichtung (1b, 1c),
**dadurch gekennzeichnet, dass** die Steuereinheit dazu konfiguriert ist, die automatische Analysevorrichtung (1b, 1c) so zu steuern, dass der Reagens-Abgabemechanismus (65a, 65b) als ein Vorbehandlungsflüssigkeits-Abgabemechanismus zum Abgeben der Vorbehandlungsflüssigkeit in den Zwischenbehälter (21) benutzt wird.

2. Automatische Analysevorrichtung (1b, 1c) nach Anspruch 1, wobei die Steuereinheit dazu konfiguriert ist, die automatische Analysevorrichtung (1b, 1c) so zu steuern, dass der Reagens-Abgabemechanismus (65a, 65b) durch den Zwischenteller (20) und den Reaktionsteller (60) benutzt wird.

3. Automatische Analysevorrichtung (1b, 1c) nach Anspruch 2, wobei ein Reagensbehälter (71), der das in das Reaktionsgefäß (61) abzugebende Reagens enthält, und ein Behälter, der die Vorbehandlungsflüssigkeit und das in den Zwischenbehälter (21) abzugebende Reagens enthält, in einer gemeinsamen Reagens-Aufbewahrungsfläche (70) angeordnet sind.

4. Automatische Analysevorrichtung (1b, 1c) nach Anspruch 1, wobei eine Reagens-Aufbewahrungsfläche (70), in der ein Reagensbehälter (71) zum Aufbewahren des in das Reaktionsgefäß (61) abzugebenden Reagens angeordnet ist, in zwei Flächen getrennt ist, und jede Reagens-Aufbewahrungsfläche (70) einen eigenen Reagens-Abgabemechanismus (65a, 65c) aufweist.

5. Automatische Analysevorrichtung (1b, 1c) nach einem der Ansprüche 1 bis 4, wobei, wenn mehrere der Reagensabgabemechanismen (65a, 65b) vorgesehen sind, die Steuereinheit dazu konfiguriert ist, die automatische Analysevorrichtung (1b, 1c) so zu steuern, dass einer der Reagensabgabemechanismen (65a, 65b) zum Abgeben der Vorbehandlungsflüssigkeit und Abgeben des Reagens für einen Test für mehrere Einheiten benutzt wird, die jeweils eine relativ kleine Anzahl von Testanfragen haben.

6. Automatische Analysevorrichtung (1b, 1c) nach Anspruch 1, 2 oder 4, wobei die Steuereinheit dazu konfiguriert ist, die automatische Analysevorrichtung (1b, 1c) so zu steuern, dass der Reagens-Abgabemechanismus (65a, 65b) zum Abgeben der Vorbehandlungsflüssigkeit und zum Abgeben des Reagens für die Tests für die mehreren Einheiten benutzt wird.

7. Automatische Analysevorrichtung (1b, 1c) nach Anspruch 1, 2 oder 6, wobei, wenn eine Zeitabfolge zum Abgeben des Reagens durch den Reagens-Abgabemechanismus (65a, 65b) sich unter den Tests für die mehreren Einheiten überlappt, die Steuereinheit dazu konfiguriert ist, die automatische Analysevorrichtung (1b, 1c) so zu steuern, dass eine Priorität auf die Abgabe des Reagens für einen Test gelegt wird, der eine relativ große Anzahl von Testanfragen aufweist.

8. Automatische Analysevorrichtung (1b, 1c) nach einem der Ansprüche 1 bis 7, wobei die automatische Analysevorrichtung (1b, 1c) aufweist:
einen Träger (100), auf dem der Probenbehälter (11) befestigt ist und der den Probenbehälter (11) zu einer Position zwischen dem Zwischenteller (20) und dem Reaktionsteller (60) befördert, und
einen Probenabgabemechanismus (105), der den Träger (100) an dieser Position zum Abgeben der Probe erreicht.

## Revendications

1. Dispositif (1b, 1c) d'analyse automatique comprenant :
un disque intermédiaire (20) sur lequel un récipient intermédiaire (21) pour exécuter un prétraitement par un liquide de prétraitement pour un échantillon distribué depuis un récipient (11) pour échantillon ou une réaction d'un réactif avec l'échantillon est agencé ;
une pluralité de mécanismes (30a-c) de test pour une pluralité d'items pour l'échantillon distribué depuis le récipient (11) pour échantillon ou le récipient intermédiaire (21) ;
un disque (60) de réaction qui est prévu sur de quelconques de la pluralité de mécanismes (30a-c) de test et sur lequel un récipient (61) pour réaction pour exécuter une réaction du réactif avec l'échantillon est agencé ;
un mécanisme (65a, 65b) de distribution de réactif qui est adapté à distribuer le réactif dans le récipient intermédiaire (21) et le récipient (61) pour réaction ; et
une unité de commande pour commander la totalité du dispositif (1b, 1c) d'analyse automatique,
**caractérisé en ce que** l'unité de commande est configurée pour commander le dispositif (1b, 1c) d'analyse automatique de telle manière que le mécanisme (65a, 65b) de distribution de réactif est utilisé comme un mécanisme de distribution de liquide de prétraitement pour distribuer le liquide de prétraitement dans le récipient intermédiaire (21).

2. Dispositif (1b, 1c) d'analyse automatique selon la revendication 1, dans lequel l'unité de commande est configurée pour commander le dispositif (1b, 1c) d'analyse automatique de telle manière que le mécanisme (65a, 65b) de distribution de réactif est utilisé par le disque intermédiaire (20) et le disque (60) de réaction.

3. Dispositif (1b, 1c) d'analyse automatique selon la revendication 2, dans lequel un récipient (71) pour réactif qui contient le réactif à distribuer dans le récipient (61) pour réaction et un récipient qui contient le liquide de prétraitement et le réactif à distribuer dans le récipient intermédiaire (21) sont agencés dans une zone (70) commune de conservation de réactifs.

4. Dispositif (1b, 1c) d'analyse automatique selon la revendication 1, dans lequel une zone (70) de conservation de réactifs dans laquelle un récipient (71) pour conserver le réactif à distribuer dans le récipient (61) pour réaction est agencé est séparée en deux zones, et chaque zone (70) de conservation de réactifs inclut un mécanisme (65a, 65b) dédié de distribution de réactif.

5. Dispositif (1b, 1c) d'analyse automatique selon l'une quelconque des revendications 1 à 4, dans lequel, lorsqu'une pluralité des mécanismes (65a, 65b) de distribution de réactif sont prévus, l'unité de commande est configurée pour commander le dispositif (1b, 1c) d'analyse automatique de telle manière que l'un quelconque des mécanismes (65a, 65b) de distribution de réactif est utilisé pour la distribution du liquide de prétraitement et la distribution du réactif pour un test pour une pluralité d'items ayant chacun un nombre relativement petit de demandes de test.

6. Dispositif (1b, 1c) d'analyse automatique selon la revendication 1, 2, ou 4, dans lequel l'unité de commande est configurée pour commander le dispositif (1b, 1c) d'analyse automatique de telle manière que le mécanisme (65a, 65b) de distribution de réactif est utilisé pour la distribution du liquide de prétraitement et la distribution du réactif pour les tests pour la pluralité d'items.

7. Dispositif (1b, 1c) d'analyse automatique selon la revendication 1, 2, ou 6, dans lequel, lorsqu'un temps de distribution du réactif par le mécanisme (65a, 65b) de distribution de réactif se chevauche parmi les tests pour la pluralité d'items, l'unité de commande est configurée pour commander le dispositif (1b, 1c) d'analyse automatique de telle manière qu'une priorité est mise sur la distribution du réactif pour un test ayant un nombre relativement grand de demandes de test.

8. Dispositif (1b, 1c) d'analyse automatique selon l'une quelconque des revendications 1 à 7, dans lequel le dispositif (1b, 1c) d'analyse automatique inclut :
un râtelier (100) sur lequel le récipient (11) pour échantillon est monté et qui transporte le récipient (11) pour échantillon jusqu'à une position entre le disque intermédiaire (20) et le disque (60) de réaction ; et
un mécanisme (105) de distribution d'échantillon qui s'approche du râtelier (100) à cette position pour distribuer l'échantillon.
